Europäisches Patentamt

European Patent Office

Office européen des brevets

(19)

(11) Publication number: **0 175 826 B1**

# EUROPEAN PATENT SPECIFICATION

(12)

(45) Date of publication of patent specification: **25.03.92**   (51) Int. Cl.⁵: **A01N 25/16**, A01N 59/00

(21) Application number: **84307250.5**

(22) Date of filing: **22.10.84**

(54) Aqueous foam containing chlorine dioxide and preparation and use thereof.

(30) Priority: **31.07.84 US 636309**

(43) Date of publication of application:
**02.04.86 Bulletin 86/14**

(45) Publication of the grant of the patent:
**25.03.92 Bulletin 92/13**

(84) Designated Contracting States:
**AT BE CH DE FR GB IT LI LU NL SE**

(56) References cited:
**GB-A- 1 571 975**
**US-A- 2 392 936**
**US-A- 3 823 727**
**US-A- 4 247 531**

(73) Proprietor: **RIO LINDA CHEMICAL COMPANY, INC.**
**2444 Elkhorn Boulevard**
**Rio Linda California 95673(US)**

(72) Inventor: **Mason, John Young**
**Route 1, Box 28**
**Plymouth, CA 95669(US)**
Inventor: **Hicks, Bruce Wayne**
**7035 West 4th Street**
**Rio Linda, CA 95673(US)**
Inventor: **English, Donald Clyde**
**1237 Beard Way**
**Carmichael, CA 95608(US)**

(74) Representative: **Thomson, Paul Anthony et al**
**Potts, Kerr & Co. 15, Hamilton Square**
**Birkenhead Merseyside L41 6BR(GB)**

EP 0 175 826 B1

Rank Xerox (UK) Business Services

## Description

It is widely recognized in commercial packing and food processing plants as well as in the paper and pharmaceutical industries, as well as other industries, that cleaning and/or sanitizing of equipment can be greatly enhanced by the use of foam rather than high pressure sprayed water. It is also common for these industries to utilize both portable and/or central clean-in-place systems to achieve and maintain sanitary conditions.

A portable foam cleaner is usually a batch system, one such system being disclosed in U.S.-A-.

3,797,744. Utilizing a plurality of tanks, a foam with or without a sanitizer can be generated. The system utilizes compressed air and chemicals under pressure to generate foam through a foam generator.

A central clean-in-place foam system utilizes a continuous process. The foam generating chemical and the sanitizing chemical are usually educted into a large mixing tank along with the water driving the eductor. An automatic level control activates the eductor water source to keep the tank filled at all times. Feed-rates, and thus concentrations and foam characteristics, can be controlled by use of rotometers. From the mixing tank, the solution is pumped under pressure throughout the plant to the individual foam generating stations. A gas, such as compressed air, is introduced at this point to generate the foam. The foam is then delivered through a hose or otherwise conducted to the surfaces to be cleaned and sanitized. U.S. -A-. 3,823,727 discloses one type of foam generating station utilized in a central foam system. Many other types are currently on the market.

The foam covers and adheres to the surface to be cleaned. Some cleaning, penetrating and loosening action can occur, depending on the formulation of the foam generating chemical. To achieve microbiological control, a sanitizer, or disinfectant chemical, is used in the foam system.

One of the advantages of using foam to achieve microbiological control is that, since it adheres to the surface and remains for a period of time, it allows more time for the disinfectant to do its work. Although the foam prolongs the contact time, those disinfectants that have rapid rate of kill are preferred in order to obtain the maximum benefit.

The sanitizing, or disinfectant, chemical is essential in order to obtain the desired destruction of the microorganisms, e.g., bacteria, molds, fungi, spores, and viruses. Common inorganic disinfectants currently in use are exemplified by chlorine and iodine. Examples of organic disinfectants are carbamates or quaternary ammonium compounds.

Although the foregoing disinfectants are somewhat effective and are widely used in the current state of the art, they have many limitations. The use of a more powerful, more rapid disinfectant would greatly enhance the sanitizing effectiveness of foam systems.

The use of chlorine dioxide in many disinfection applications is growing widely because of its superior bactericidal, sporicidal, fungicidal, and viricidal properties as well as its extremely fast rate of disinfection. The use of chlorine dioxide in a foam system would greatly enhance the art of sanitizing.

Prior to this invention, the use of chlorine dioxide in foams or foam cleaners for the disinfection of microorganisms was not known. Chlorine dioxide is irritating and has a very noxious odor at concentrations as low as 0.5 ppm in a water system. Moreover, chlorine dioxide does not undergo hydrolysis so its irritating and noxious properties persist. It was previously thought that it was impossible to use chlorine dioxide in an aqueous foam system at relatively high chlorine dioxide concentrations since its strong, unpleasant odor when dissolved in water makes it impossible to spray at concentrations necessary to achieve sanitization in, for example, food processing plants where personnel are working in the close vicinity.

Another reason that chlorine dioxide has not previously been used in a foam system at relatively high chlorine dioxide concentrations is that it is such a strong oxidizing agent that it was thought that it would destroy or break down the organic compounds that make up the foam generating chemical. Another reason that chlorine dioxide has not previously been used in a foam system is that it was thought that the chlorine dioxide would undergo rapid degradation and lose its disinfectant and biocidal properties.

Surprisingly, the use of chlorine dioxide in a foam system, in accordance with the practice of this invention, does not result in any chlorine dioxide odor at relatively high concentrations up to 1200 ppm. Moreover, it does not destroy the organic foam generating compounds. In effect, if formulated correctly, the chlorine dioxide foam solution of this invention is very stable and produces a foam of exceptionally high quality. In addition, it has been found that chlorine dioxide in foam solutions is very stable and remains potent as a biocide for up to at least 72 hours or even longer.

The term "foam solution" as used herein means an aqueous disinfectant solution containing a foam generating chemical and which is capable of producing a foam when mixed with a gas such as air in, for example, a foam generator. The foam generating chemical is typically one or more surfactants. A suitable surfactant may be cationic, nonionic, or anionic, as long as it is capable of forming an aqueous foam. The choice of surfactant is within the skill of the art. The disinfectant is primarily chlorine dioxide.

Three well known reactions for generating chlorine dioxide from sodium chlorite are as follows:

(1) $2 NaClO_2 + Cl_2 \rightarrow 2 ClO_2 + 2 NaCl$

(2) $2 NaClO_2 + HOCl \rightarrow 2 ClO_2 + NaCl + NaOH$

(3) $5 NaClO_2 + 4HCl \rightarrow 4 ClO_2 + 5 NaCl + 2 H_2O$

Equation (1) exemplifies the generation of chlorine dioxide by the action of an oxidizing agent, i.e., chlorine, on a metal chlorite, i.e., sodium chlorite. Equation (2) exemplifies the generation of chlorine dioxide by the action of an oxidizing acid, i.e., hypochlorous acid, on a metal chlorite. Equation (3) illustrates the production of chlorine dioxide by the action of an acid, i.e., hydrochloric acid, on a metal chlorite. It will be understood that the above reactions are not limited to the metal chlorite, oxidizing agents and acids illustrated and that the choice of reactants is within the skill of the art.

By means of the foregoing reactions, chlorine dioxide may be obtained by, for example, use of a commercially available chlorine dioxide generator and dissolved in the foam solution. A chlorine dioxide generating apparatus is described in U.S. -A- 4,247,531. Alternatively, chlorine dioxide may be generated in the foam solution via one of the above reactions.

U. S. -A-. 2,392,936 discloses aqueous oxidizing foam solutions which are taught to be useful in decontaminating areas contaminated with, for example, noxious or poisonous chemicals. The disclosed aqueous foam solutions contain a foam generating soap and an oxidizing agent such as sodium chlorite. It is disclosed that the foregoing solution may be acidified by the addition of hydrochloric acid to a pH of about 4. It has been found that when the pH of such a solution has been lowered to about 4, only about 0.5 percent of the sodium chlorite is converted to chlorine dioxide.

## SUMMARY OF THE INVENTION

The instant invention provides an aqueous foam solution, preferably an aqueous disinfectant solution, containing chlorine dioxide as the disinfectant. Such foam solutions are capable, when mixed with a gas such as compressed air, of forming stable foams. Moreover, the foam solutions of this invention are stable, retaining disinfectant and biocidal properties for 72 hours and longer. In addition, the foam solutions and foams derived therefrom do not exhibit the noxious odor of chlorine dioxide, even at relatively high chlorine dioxide concentrations.

Broadly viewed in one of its principal aspects, this invention consists of an aqueous solution having disinfectant properties and the capability of forming a stable foam, said solution comprising a major proportion of water having dissolved therein, 1% to 20% by weight of a foam generating agent and 10 to 1500 mg/l of chlorine dioxide wherein said chlorine dioxide may be generated outside the solution and subsequently dissolved therein, or it may be generated within the solution by the action of an oxidising agent or a cationic exchange resin in the acidic form on a metal chlorite dissolved in said solution, or it may be generated within the solution by the action of an acid present in an amount sufficient to lower the pH of said solution below 3.7 on a metal chlorite dissolved in said solution.

The aqueous foam solution of this invention may be used to clean and disinfect a surface in need thereof in accordance with the following steps:

1. An aqueous disinfectant solution comprising a major proportion of water, 1% to 20% by weight of a foam generating agent, and 10 to 1500mg/l of chlorine dioxide is mixed with a gas in a foam generator to thereby form a disinfectant foam;
2. Said disinfectant foam is sprayed on the surface to be treated;
3. The disinfectant foam is allowed to remain in contact with said surface for a period of time sufficient to allow cleaning and disinfection thereof, and
4. Said disinfectant foam is thereafter removed from said surface.

The instant invention thus provides an aqueous solution having disinfectant and biocidal properties and the capability of forming a foam as well as a method of cleaning and disinfecting a surface in need thereof by contacting said surface with said disinfectant foam. The invention is characterised by the use of chlorine dioxide as the disinfectant. The disinfectant foam solutions of the invention are stable, with the chlorine dioxide retaining its disinfectant and biocidal properties over long periods of time. Moreover, the foam solutions and foams derived therefrom do not have the noxious odor of chlorine dioxide, even at relatively high chlorine dioxide concentrations. In addition, the disinfectant foam solutions of the invention are capable of forming stable foams.

The nature and substance of the present invention as well as its objects and advantages will be more clearly perceived and fully understood by referring to the following description of the preferred embodiments.

DESCRIPTION OF THE PREFERRED EMBODIMENTS

The instant invention provides for continuous or batch processes for the production of aqueous disinfectant foam solutions containing an organic foam generating agent, typically a surfactant, and chlorine dioxide. The solutions may also contain various organic or inorganic penetrants, solvents, additional detergents, couplers, and cleaning compounds to enhance the disinfection and cleaning capability of the foam.

The foam solution of the invention may be prepared by generating the chlorine dioxide outside the solution and subsequently dissolving it therein. The chlorine dioxide may be obtained by use of a commercially available chlorine dioxide generator such as that disclosed in U. S. -A-. 4,247,531. The chlorine dioxide may alternatively be obtained by use of a stabilized chlorine dioxide solution or by use of chlorine dioxide-releasing chemicals. Foam solutions where the chlorine dioxide is prepared outside the solution and subsequently added may be either acidic or basic.

The foam solution of the invention may be an acid-coupled foam solution containing 2% to 20% by weight of inorganic acid, preferably 4% to 14% by weight of inorganic acid; 1% to 15% by weight of foam generating agent; and 1% to 20% by weight of cleaning and disinfection enhancement compounds such as penetrants, solvents, and alkaline cleaners. In an acid-coupled foam solution, the foam generating agent is an anionic surfactant such as an organic acid in the free acid form and coupled with an inorganic, or mineral, acid. The acid-coupled foam solution is mixed with a solution containing 1% to 25% by weight of a water soluble metal clorite, preferably 10% to 15% by weight of metal chlorite, in such a ratio of acid-coupled foam solution to metal chlorite solution as to provide a final solution having a pH below 3.7 to thereby obtain 10 to 1500 mg./l. of chlorine dioxide and preferably 15 to 500 mg./l. of chlorine dioxide in the foam solution. It is critical to the practice of this invention that when chlorine dioxide is generated in the aqueous foam solution by the action of an acid on a metal chlorite dissolved in said solution, the pH of the final solution be below 3.7. If the pH is above 3.7, only an insignificant amount of metal chlorite is converted to chlorine dioxide. It is preferred that the pH of the final solution be within the range of 1 to 3.5, with a pH of about 2.5 being most preferred.

The foam solution of this invention may alternatively be alkaline. Such alkaline foam solutions contain 2% to 20% by weight of foam generating agent, 1% to 20% by weight of a caustic material such as sodium hydroxide, and 1% to 20% by weight of disinfection and cleaning enhancement compounds. The alkaline foam solutions preferably contain 5% to 15% by weight of foam generating agent, 5% to 12% by weight of caustic material, and 4% to 14% by weight of disinfection and cleaning enhancement compounds. This solution is added in an amount of 0.01 to 5.0 oz. per gallon, (0.078 to 39.0 ml/l) preferably 0.05 to 2.0 oz. per gallon (0.4 to 15.6 ml/l), to water containing 10 to 1500 mg./l., and preferably 15 to 500 mg./l., of chlorine dioxide.

It is within the scope of this invention to generate the chlorine dioxide in the foam solution. An aqueous solution containing a foam generating agent and a water soluble metal chlorite may be reacted with an aqueous solution containing an acid in an amount such that the final solution has a pH below about 3.7; it may be passed through a column containing a cationic exchange resin in the acidic form, or it may be reacted with an oxidizing agent such as chlorine or a solution containing an oxidizing acid, e.g., a solution containing an acid, and a water soluble metal hypochlorite, i.e., a hypochlorous acid solution. The water soluble metal chlorite is preferably an alkali metal chlorite such as lithium chlorite, sodium chlorite, or potassium chlorite; or an alkaline earth metal chlorite such as calcium chlorite, magnesium chlorite, or barium chlorite. The acid may be a mineral acid such as hydrochloric acid, sulfuric acid, or boric acid; it may be an organic acid such as oxalic acid, acetic acid, or citric acid; or it may be an acidic salt such as sodium bicarbonate, potassium dihydrogen phosphate or sodium bisulfate as well as any combination of the foregoing acids provided the final solution has a pH below 3.7. Examples of cationic exchange resins are commercial cationic exchange resins in the acid form. The water soluble metal hypochlorite is preferably an alkali metal hypochlorite such as lithium hypochlorite, sodium hypochlorite, or potassium hypochlorite; or an alkaline earth metal hypochlorite such as calcium hypochlorite, magnesium hypochlorite, or barium hypochlorite. The metal hypochlorite is reacted with a mineral acid such as hydrochloric acid or an organic acid such as acetic acid to form hypochlorous acid.

When a foam solution of this invention is prepared as described above, the resulting solution may contain chlorous acid and chlorite ion in addition to chlorine dioxide. Chlorous acid and chlorite ion are beneficial as biocides and foam solutions containing them are within the scope of this invention.

The aqueous solution containing foam generating agent and metal chlorite contains 1% to 20% by weight and preferably 10% to 15% by weight of foam generating agent, 1% to 15% by weight, and preferably 3% to 9% by weight, of metal chlorite; with the remainder of the solution being made up of cleaning and disinfection enhancement compounds dissolved in water.

The acid solution that is reacted with the above solution of foam generating agent and metal chlorite preferably has a concentration of 1% to 50% by weight of acid and, more specifically, a concentration of 20% to 40% by weight of acid.

The metal hypochlorite solution that is prereacted with an acid before contact with the metal chlorite-bearing foam solution contains between 1% and 40% by weight, and preferably between 7% and 16% by weight, of metal hypochlorite.

In any event, the foregoing solutions are reacted in such ratios and subsequently diluted to yield a foam solution containing 10 to 1500 mg./l. of chlorine dioxide and preferably 15 to 500 mg./l. of chlorine dioxide and which is stable over at least a 72 hour period while retaining its foaming ability and chlorine dioxide content.

The aqueous solution containing foam generating agent and metal chlorite may also be reacted with an oxidizing agent such as bromine or preferably chlorine to thus generate chlorine dioxide in the foam solution. The solution of foam generating agent and water soluble metal chlorite broadly contains 1% to 20% by weight of foam generating agent, 1% to 15% by weight of metal chlorite, and 1% to 20% by weight of cleaning and disinfection enhancement compounds. Preferably, the solution contains 5% to 15% by weight of foam generating agent, 3% to 8% by weight of metal chlorite, and 5% to 15% by weight of disinfection and cleaning enhancement compounds. The solution of foam generating agent and metal chlorite is brought together with chlorine in a prereaction column and is subsequently diluted with water to the desired concentration. The reactants are brought together in such a ratio as to provide a stable foam solution containing 1 to 1500 mg./l. of chlorine dioxide, and preferably 15 to 500 mg./l. of chlorine dioxide. It has been noted in water treatment that sometimes the use of chlorine dioxide in combination with chlorine is superior to the use of either separately, so for some applications it is advantageous to add excess chlorine to the reaction mixture. Thus, it is advantageous in certain applications to have the foam solution contain up to 500 mg./l. of chlorine, and preferably up to 250 mg./l. of chlorine. As described above, in this embodiment where an oxidizing agent such as chlorine is used, the water soluble metal chlorite is preferably an alkali metal chlorite or an alkaline metal earth chlorite.

Examples of disinfection enhancement agents used in the foam solutions of this invention are penetrants such as the free acid forms of phosphate esters and sodium hexalene sulfonate that enhance the ability of the chlorine dioxide to penetrate slime layers and give a more complete kill.

Examples of cleaning enhancement compounds that are used in the foam solutions of this invention are hexalene glycol, sodium xylene sulfate, sodium tripoly phosphate, sodium metasilicate, sodium silicate, tetrasodium ethylenediamine tetraacetate, sodium glucoheptanate, tetrapotassium polyphosphate, alkyl sulfonates and fatty alcohol sulfates.

Examples of solvents are hexalene glycol, castor oil, ethylene glycol polymers and short and medium length alcohols.

Examples of couplers used in the foam solutions of this invention are free acid and salt forms of phosphate esters, sodium triethanolamine, alkoxylated lanolin and sodium xylene sulfonate.

As mentioned above, the foam generating agent of this invention is a surfactant which may be a cationic surfactant, a nonionic surfactant, or an anionic surfactant. Examples of nonionic surfactants are polyvinyl alcohol, polyvinyl pyrrolidone and nonylphenoxy polyethanol. Examples of suitable anionic surfactants are linear alkyl sulfonates and alkyl-substituted aromatic sulfonate such as dodecylbenzene sulfonate. Examples of suitable cationic surfactants are alkyl quaternary ammonium salts and the coconut oil acid ester of sodium isothionate.

The nature and substance of the instant invention as well as its objects and advantages will be more clearly understood by referring to the following specific examples.

EXAMPLE I

A foam solution was prepared by adding 0.75 fluid ounces of a foam generating agent comprising a linear alkyl sulfonate, sodium xylene sulfonate which is an ionic-nonionic coupler, sodium hexalene sulfonate which is a penetrant, and sodium hydroxide to 1 gallon (3,758 $\ell$) of water containing 150 mg./l. of chlorine dioxide. Chlorine dioxide concentration was measured by ampermetric titration as described in "Chemistry in Water Reuse," Chapter 21, by Roberts and Aieta. The chlorine dioxide foam solution was then passed through a booster pump at a rate of flow of 3 gallons (11.355 $\ell$) per minute (gpm) under a pressure of 60 psig. (4.13 x $10^5$ Pa) After passing through a check valve in the line, air was added at 60 psig (4.13 x $10^5$ Pa) to the foam solution to form a foam spray. A 7,200 cubic foot (0,203 m$^3$), room was sprayed with the foam which was left in place for 5 minutes. A total of 8,516 mg. of chlorine dioxide should have been released into the room, resulting in 0.12 ppm of chlorine dioxide in the air, an amount that should have been easily detected by odor. There was no detectable odor of chlorine dioxide in the room.

The above experiment was repeated with foam solutions containing various concentrations of chlorine dioxide up to 1200 mg./l. of chlorine dioxide. The results were the same as those obtained using the foam solution containing 150 mg./l. of chlorine dioxide. It should be noted that 1200 mg./l. of chlorine dioxide was chosen as the practical upper limit in the foregoing experiments due to economic considerations, not because of an odor problem.

## EXAMPLE II

A chlorine dioxide foam solution was prepared by passing 10 parts by volume of an acidic foam concentrate containing 78.99 percent by weight of water, 13.7 percent by weight of dodecylbenzene sulfonic acid, and 7.31 percent by weight of nonylphenoxypolyethanol through a prereaction column with 1 part by volume of a 15% by weight solution of sodium chlorite. The resultant solution has a pH below 3.7. After passing through the prereaction column, the foam concentrate was diluted with water in a ratio of 1 part by volume of concentrate to 125 parts by volume of water resulting in a foam solution containing 70 mg./l. of chlorine dioxide and 10 mg./l. of chlorous acid. The foam solution was then passed through the foam generator described in Example I and the resultant foam sprayed onto a can palletizer and feed belt. Both the palletizer and the feed belt had a heavy mold covering that had been previously treated with a solution containing 5000 mg./l. of sodium hypochlorite without success. The chlorine dioxide foam was left in contact with the palletizer and feed belt for 5 minutes, resulting in a complete kill of the mold. Mold kill was judged by the ease of removal of the mold from the affected surfaces, and by before and after regrowth of molds judged by plates taken.

## EXAMPLE III

A chlorine dioxide foam solution was prepared by passing 10 parts by volume of an acidic foam concentrate containing 56.35% by weight of water, 14.03% by weight of dodecylbenzene sulfonic acid, 7.8% by weight of nonylphenoxypolyethanol, 1.72% by weight of hexamethylene glycol, 2.45% by weight of sulfuric acid and 1.65% by weight of sodium xylene sulfonate through a reaction column with 7.5 parts by volume of a solution containing water, 14.8% of sodium chlorite, and 2.2% sodium hexalene sulfonate. The resultant solution had a pH below 3.7. The foam concentrate was subsequently diluted with water at a ratio of 128 parts by volume of water to 1 part by volume of foam concentrate, resulting in a chlorine dioxide concentration of 145 mg./l. and a chlorous acid concentration of 325 mg./l. The foam solution was passed through a foam generator as described in Example I and the resultant foam was sprayed onto a cement wall with a heavy slime buildup. The foam was allowed to remain in contact with the wall for a ten minute period. The wall was then sprayed with water to remove the foam. Complete slime kill down to the bare cement was achieved.

## EXAMPLE IV

The foam solution of Example III was again prepared, this time having a chlorine dioxide concentration of 147 mg./l. and a chlorous acid concentration of 310 mg./l. The foam solution was passed through a foam generator as described in Example I and the resultant chlorine dioxide foam was used in an area consisting of a sump with cement walls and metal fixtures. Both walls and fixtures were covered with 1/8 - 3/8 inches (0.3 - 0.9 cm) of mold (geotrichum, aspergillus niger). Plates were taken on five sites in the area before the beginning of the test to quantify the viability of the mold. Sites one and two were treated with a foam solution containing 483 mg./l. of chlorine. Sites three and four were treated with the foregoing chlorine dioxide foam solution containing 147 mg./l. chlorine dioxide and 310 mg./l. chlorous acid. Site five was selected as a control with treatment of a non-biocide bearing foam. The foam solutions were allowed to stand for five minutes, and were then rinsed with potable water to remove the foam. Plates were then taken at all sites. After incubation the plates were evaluated for mold growth. All sites except for site 5 showed a reduction in mold growth. The sites treated with chlorine dioxide bearing foam showed significantly less growth than the sites treated with the chlorine bearing foam. Immediately after completion of the first test, site 1 was again treated with a foam bearing 483 mg./l. of chlorine, sites 2, 3, and 4 with a foam bearing 147 mg./l. of chlorine dioxide and 54 mg./l. of chlorite ion. Site 5 was again chosen as a control, and treated with a non-biocidal foam. Again plates were taken and incubated and evaluated. The sites treated with chlorine dioxide in both tests (sites 3 and 4) showed the least growth followed by site 2, site 1, and site 5 in increasing order of growth.

## EXAMPLE V

In accordance with the teaching of U. S. Patent No. 2,392,936, 62.5 g. of 10 weight percent of technical sodium chlorite solution, 31.75 g. of foaming agent (10 weight percent of dodecylbenzene sulfonic acid in water with enough sodium hydroxide added to give a pH of 6.5-7.0), and 0.75 ml. of 35% hydrochloric acid were dissolved in water. The resultant solution had a Ph in the range of 3.7 - 4.0. The solution was allowed to react for 15 minutes and then analyzed in accordance with the procedure of Aieta, Roberts and Hernandez, AWWA JOURNAL, Volume 76, No. 1. (January, 1984). It was found that 0.5% of the chlorite ion was converted to chlorine dioxide, 24.7% was converted to chlorate ion, no chlorine was formed, and 72.3% of the chlorite ion remained unchanged. The balance was presumed to have been converted to chloride ion.

In contrast to the above and in accordance with the practice of this invention, 5 parts of an aqueous solution containing 14.03% of dodecylbenzene sulfonic acid, 7.8% of a phosphate ester, 9.72% of hexamethylene glycol, 2.45% of hydrochloric acid, and 3.86% of sodium xylene sulfonate was reacted with 1 part of a solution containing 18.5% of technical sodium chlorite, 2.2% of sodium xylene sulfonate, and 79.3% of water. The resultant solution had a pH of 2.3. The solution was allowed to react for 15 minutes and analyzed as above. It was found that 48.5% of the chlorite ion was converted to chlorine dioxide, 11% was converted to chlorate ion, and 28.3% remained unreacted. The balance was again presumed to have been converted to chloride ion. It is seen that, by the practice of this invention, the conversion of metal chlorite to chlorine dioxide by the action of an acid is approximately 100 times greater than that achieved by the method disclosed in U. S. -A-. 2,392,936.

EXAMPLE VI

Five parts of a solution containing 75.5% water, linear alkyl sulfate 9.59%, hexalene glycol 6.93%, 0.32 tetrasodium ethylamine-diamine tetra acetate, 5.04% of a phosphate ester, 2.5% sodium hydroxide was educted into a reaction column with one part of a solution containing 14.8% sodium chlorite, 2.2% sodium xylene sulfonate, and 83% water. Enough chlorine gas to react stoichiometrically with the chlorite present by the following equation was also educted into the reaction column.

$$2 \; NaClO_2 \; and \; Cl_2 \rightarrow 2 \; ClO_2 \; + \; 2 \; NaCl$$

The resultant solution was diluted in the venturi at a ratio of 106:1 with water. Eighty-nine percent of the chlorite ion feed was converted to chlorine dioxide, 4.5% to chlorate ion, and 6.5% remained unreacted. This corresponds to 174 mg/l $ClO_2$, 11.0 mg/l $ClO_3^-$, and 12.7 mg/l $ClO_2^-$ in the final foam solution. The final pH of the foam solution was 11.4.

It should be noted that the chlorine-chlorite reaction is independent of pH and that excess chlorine could be easily added to the foam solution through the reaction column in this embodiment of the invention.

EXAMPLE VII

One part of a solution containing 49 grams/L NaOCl was educted with one part of a solution containing 95 grams/l $NaClO_2$ through a column with a hydrogen ion bearing cation exchange resin. The contact time allowed in the column was less than 30 seconds. The resultant solution was diluted 1 part to 22 parts of water and with 1 part of a solution containing water 75.55%, linear alkyl sulfonate 9.59%, hexalene glycol 6.93%, 0.32% tetrasodium ethylamine-diamine tetra acetate, 5.04% of a phosphate ester and 2.5% sodium hydroxide. The resulting foam solution contained 199 mg/l $ClO_2$, 65 mg/l $Cl_2$, and 74 mg/l Chlorite ion. This corresponds to a 71% conversion of chlorite to chlorine dioxide.

Thus, this invention provides an aqueous solution having disinfectant and biocidal properties and the capability of forming a foam as well as a method of cleaning and disinfecting a surface in need thereof by contacting the surface with said disinfectant foam. The invention is characterized by the use of chlorine dioxide as the disinfectant. The chlorine dioxide may be prepared in a commercially available chlorine dioxide generator and dissolved in the foam solution. Alternatively, the chlorine dioxide may be formed in the foam solution by the reaction of chlorine dioxide-releasing chemicals. The disinfectant foam solutions of the invention are stable, with the chlorine dioxide retaining its disinfectant and biocidal properties over long periods of time. Moreover, the foam solutions and foams derived therefrom do not have the noxious odor of chlorine dioxide, even at relatively high chlorine dioxide concentrations. In addition, the foams formed from the disinfectant foam solutions of this invention are surprisingly stable.

While specific embodiments of the present invention have been shown and described in detail to illustrate the utilization of the inventive principles, it is to be understood that such showing and description have been offered only by way of example and not by way of limitation. Protection by Letters Patent of this invention in all its aspects as the same are set forth in the appended claims is sought to the broadest extent that the prior art allows.

**Claims**

1. An aqueous solution with the capability of forming a foam comprising a major proportion of water having dissolved therein 1% to 20% by weight of a foam generating agent and 10 to 1500 mg/l of chlorine dioxide, and wherein said chlorine dioxide is generated outside the solution and subsequently dissolved therein.

2. An aqueous solution with the capability of forming a foam comprising a major proportion of water having dissolved therein l% to 20% by weight of a foam generating agent and l0 to l500 mg/l of chlorine dioxide, and wherein said chlorine dioxide is generated in said solution by the reaction of a water soluble metal chlorite and an oxidizing agent dissolved therein.

3. An aqueous solution with the capability of forming a foam comprising a major proportion of water having dissolved therein l% to 20% by weight of a foam generating agent and l0 to l500 mg/l of chlorine dioxide, and wherein said chlorine dioxide is generated in said solution by the reaction of a water soluble metal chlorite dissolved therein and a cationic exchange resin in the acidic form which is brought into contact with said aqueous solution.

4. An aqueous solution as claimed in claim l, wherein said solution is a disinfectant solution.

5. An aqueous solution as claimed in claim 2, wherein said solution is a disinfectant solution.

6. An aqueous solution as claimed in claim 3, wherein said solution is a disinfectant solution.

7. An aqueous solution as claimed in claim l or 4, wherein said solution comprises a major proportion of water, 5% to l5% by weight of foam generating agent and l5 to 500 mg./l. of chlorine dioxide, and which in addition contains 4% to l5% by weight of cleaning and disinfection enhancement compounds.

8. An aqueous solution as claimed in claim 2 or 5, wherein said solution comprises a major proportion of water, 5% to l5% by weight of foam generating agent and l5 to 500 mg./l. of chlorine dioxide, and which in addition contains 4% to l5% by weight of cleaning and disinfection enhancement compound.

9. An aqueous solution as claimed in claim 3 or 6, wherein said solution comprises a major proportion of water, 5% to 15% by weight of foam generating agent and 15 to 500 mg/1. of chlorine dioxide, and which in addition contains 4% to l5% by weight of cleaning and disinfection enhancement compounds.

10. An aqueous solution as claimed in claim 9, which in addition contains chlorous acid and chlorite ion.

11. An aqueous solution as claimed in claim 8 wherein said water soluble metal chlorite is selected from alkali metal chlorites and alkaline earth metal chlorites and said oxidizing agent is chlorine.

12. An aqueous solution as claimed in claim 8, wherein the oxidizing agent is hypochlorous acid.

13. An aqueous solution as claimed in claim 11 wherein excess chlorine is present in said solution.

14. An aqueous solution as claimed in claim 7, wherein said water soluble metal chlorite is selected from alkali metal chlorites and alkaline earth metal chlorites.

15. An aqueous solution as claimed in claim 9 wherein said water soluble metal chlorite is selected from alkali metal chlorites and alkaline earth metal chlorites.

16. An aqueous solution as claimed in claim 7, wherein said solution has an alkaline pH.

17. An aqueous solution as claimed in claim 7, wherein said solution has an acidic pH.

18. A method for cleaning and disinfecting a surface in need thereof comprising the steps:
   a. Mixing an aqueous disinfectant solution comprising a major proportion of water, 1% to 20% by weight of a foam generating agent, and l0 to l500 mg/l of chlorine dioxide with a gas in a foam generator to thereby form a disinfectant foam;
   b. Spraying said foam on the surface to be treated;
   c. Allowing the disinfectant foam to remain in contact with said surface for a period of time sufficient to allow cleaning and disinfection thereof, and
   d. Removing said disinfectant foam from said surface.

19. A method as claimed in claim l8, wherein said surface is contaminated with a microorganism.

20. A method as claimed in claim 19, wherein said microorganism is selected from fungi, bacteria, molds, spores, and viruses.

21. A method as claimed in claim l9, wherein the gas which is mixed with the aqueous disinfectant solution in the foam generator is compressed air, and wherein the disinfectant foam is allowed to remain in contact with the surface to be treated for about five to about fifteen minutes.

22. A method as claimed in any one of claims l8 to 21, wherein the aqueous disinfectant solution is the disinfectant solution of claim 4.

23. A method as claimed in any one of claims 11 to 21, wherein the aqueous disinfectant solution is the disinfectant solution of claim 5.

24. A method as claimed in any one of claims l8 to 21, wherein the aqueous disinfectant solution is the disinfectant solution of claim 6.

25. A method as claimed in any one of claims l8 to 2l wherein the aqueous disinfectant solution is the disinfectant solution of claim 11.

26. A method as claimed in any one of claims l8 to 21, wherein the aqueous disinfectant solution is the disinfectant solution of claim l4.

27. A method as claimed in any one of claims l8 to 21, wherein the aqueous disinfectant solution is the disinfectant solution of claim l5.

28. A method for preparing the aqueous disinfectant solution of claim 11 comprising the steps:
   a. Dissolving the foam generating agent, the cleaning and disinfection enhancement compounds, and the metal chlorite in sufficient water to form a concentrated solution thereof;
   b. Contacting said concentrated solution with gaseous chlorine in a prereaction column, and
   c. Diluting the reaction mixture with water to the desired concentration.

29. A method for preparing the aqueous disinfectant solution of claim l5, comprising the steps:
   a. Dissolving the foam generating agent, the cleaning and disinfection enhancement compounds, and the metal chlorite in sufficient water to form a concentrated solution thereof;
   b. Passing said concentrated solution through a reaction column packed with the cationic exchange resin in the acidic form, and
   c. Diluting the reaction mixture with water to the desired concentration.

30. An aqueous solution with the capability of forming a foam comprising a major proportion of water having dissolved therein l% to 20% by weight of a foam generating agent and l0 to l500 mg/l of chlorine dioxide,and wherein said chlorine dioxide is generated in said solution by the reaction of a water soluble metal chlorite dissolved therein and an acid in an amount sufficient to lower the pH of said solution below 3.7.

31. An aqueous solution as claimed in claim 30, wherein said solution is a disinfectant solution.

32. An aqueous solution as claimed in claim 30 or 31 wherein said solution has a pH within the range of l to 3.5.

33. An aqueous solution as claimed in claim 30,3l or 32 wherein said solution comprises a major proportion of water, 5% to l5% by weight of foam generating agent and l5 to 500 mg/l. of chlorine dioxide, and which in addition contains 4% to 15% by weight of cleaning and disinfection enhancement compounds.

34. An aqueous solution as claimed in any one of claims 30 to 33, wherein said water soluble metal chlorite is selected from alkali metal chlorites and alkaline earth metal chlorites and said acid is a mineral acid.

35. A method as claimed in claim l8, wherein the aqueous disinfectant solution is the disinfectant solution of claim 3l.

36. A method as claimed in claim l8, wherein the aqueous disinfectant solution is the disinfectant solution of claim 34.

37. A method for preparing the aqueous disinfectant solution of claim 34 comprising the steps:
   a. Dissolving the foam generating agent, the cleaning and disinfection enhancement compounds, and the metal chlorite in sufficient water to form a concentrated solution thereof;
   b. Adding to said concentrated solution sufficient mineral acid to give a pH within the range of l to 3.5, and
   c. Diluting the reaction mixture with water to the desired concentration.

38. A process for the preparation of a foam having substantial amounts of chlorine dioxide gas entrained therein, wherein the foam is intended for cleaning, disinfecting or deodorizing purposes, characterised in that the process comprises the steps of providing an aqueous solution having at least one surface active agent therein, entraining chlorine dioxide gas in the aqueous solution, wherein the amount of chlorine dioxide gas entrained in the aqueous solution is substantial and constitutes the active ingredient therein, pressurizing the aqueous foam solution containing chlorine dioxide,and adding a pressurized gas to the pressurized foam solution, thereby forming the foam, and wherein upon use of the foam, no significant amount of chlorine gas or chlorine dioxide gas is liberated from the foam to the adjacent environment.

39. A process as claimed in claim 38, characterised in that chlorine dioxide is generated externally of the aqueous solution and is subsequently dissolved therein.

40. A process as claimed in claim 30, characterised in that chlorine dioxide is generated within the aqueous solution.

41. A process as claimed in claim 40, characterised in that generation of chlorine dioxide within the aqueous solution comprises the steps of dissolving a soluble metal chlorite in the aqueous solution, dissolving a soluble metal hypochlorite in the aqueous solution, providing a reaction chamber having a cation exchange resin therein, and simultaneously passing the aqueous solution through the reaction chamber, thereby forming chlorine dioxide within the aqueous solution leaving the chamber.

42. A process as claimed in claim 41, characterised in that the soluble metal chlorite is selected from, alkali metal chlorites and alkaline earth metal chlorites.

43. A process as claimed in claim 41 or 42 characterised in that the soluble metal hypochlorite is selected from alkali metal hypochlorites and alkaline earth metal hypochlorites.

44. A process as claimed in claim 41, 42 or 4 3 characterised in that cation exchange resin comprises a hydrogen ion bearing cation exchange resin.

45. A process as claimed in claim 40, characterised in that chlorine dioxide is generated in a reaction chamber by the reaction between an aqueous solution of at least one soluble metal chlorite selected from alkali metal chlorites and alkaline earth metal chlorites, and an aqueous solution containing said surface active agent, a foam stabilizing agent, and at least one acid selected from an organic acid and an inorganic acid, wherein the reactants are combined in a reaction chamber for an appropriate length of time, whereby a concentrated solution is formed having a measurable quantity of chlorine dioxide being greater than a 0.5% conversion yield therefrom.

46. A process as claimed in claim 40, characterised in that chlorine dioxide is generated by vacuum educting, in a reaction chamber, the aqueous solution having dissolved therein a soluble metal chlorite selected from at least one soluble alkali metal chlorite and alkaline earth metal chlorites, water, said surface active agent, and chlorine gas.

47. A process as claimed in claim 45 or 46, characterised in that the chlorites, water and surfactant are mixed into one aqueous solution.

48. A process as claimed in claim 38 or 39, characterised in that a foam stabilizing agent is added to the aqueous solution.

49. A process as claimed in claim 48 characterised in that the foam stabilizing agent comprises an organic polymeric foam couple stabilizing adjuvant.

50. A process as claimed in claim 49, characterised in that the organic polymeric foam couple stabilizing adjuvant is selected from free acid and salt forms of phosphate esters, sodium triethanolamine, alkoxylated lanolin and sodium xylene sulfonate.

51. A process as claimed in any one of claims 38 to 50, characterised in that the pressurized gas comprises compressed air.

52. A process as claimed in any one of claims 38 to 5l, characterised in that the chlorine dioxide gas is substantially stable and remains active for at least 72 hours.

53. A process as claimed in any one of claims 38 to 52 characterised in that the odour of chlorine dioxide gas is not detected at concentrations up to l200 ppm of chlorine dioxide gas in the pressurized foam.

54. A process as claimed in any one of claims 38 to 53, further including the step of adding at least one organic solvent into the aqueous solution.

55. A process as claimed in claim 54, characterised in that the organic solvent is selected from hexalene glycol, castor oil, ethylene glycol polymers, and short and medium length alcohols.

56. A process as claimed in any one of claims 30 to 55, characterised in that the surface active agent is selected from anionic, nonionic, cationic and amphoteric surfactants.

57. A process as claimed in any one of claims 30 to 56, characterised in the pH of the aqueous solution prior to forming the foam is below 3.7.

58. A process as claimed in any one of claims 30 to 57, characterised in that the aqueous solution is further diluted with water.

59. A process for the preparation of a foam having chlorine dioxide gas entrained therein, wherein the foam is intended for cleaning, disinfecting or deodorizing purposes characterised in that the process comprises the steps of providing an aqueous solution, entraining chlorine dioxide in an aqueous solution, adding at least one organic polymeric foam coupler stabilizer adjuvant to the aqueous solution, adding at least one organic solvent to the aqueous solution, adding at least one surface active agent to the aqueous solution, wherein the pH of the aqueous solution is below pH 3.7, and wherein the step of forming the foam comprises pressurizing the aqueous solution and the introducing compressed air into the aqueous solution, such that the amount of chlorine dioxide entrained in the foam is substantial and constitutes the active ingredient therein, wherein the pressurized foam is substantially stable over at least approximately 72 hours for effective cleaning, disinfecting or deodorizing purposes, wherein no significant amount of chlorine dioxide or chlorine gas is liberated from the foam to the adjacent environment during use of the foam, and wherein the odour of chlorine dioxide gas is not detected at concentrations up to 1200 ppm of chlorine dioxide in the foam.

60. A process for the preparation of a foam having chlorine dioxide gas entrained therein, wherein the foam is intended for cleaning, disinfecting or deodorizing purposes, characterised in that the process comprises the steps of providing an aqueous solution, dissolving chlorine dioxide gas into the aqueous solution, adding at least one foam stabilizing agent comprising an organic polymeric foam coupler stabilizing adjuvant into the aqueous solution, said organic polymeric foam coupler stabilizing adjuvant being selected from free acid and salt forms of phosphate esters, sodium triethanolamine, alkoxylated lanolin and sodium xylene sulfonate, adding at least one organic solvent into the aqueous solution, the organic solvent being selected from hexalene glycol, castor oil, ethylene glycol polymers, and short and medium length alcohols, adding at least one surfactant to the aqueous solution, the surfactant being selected from anionic, nonionic, cationic and amphoteric surfactants, and forming a foam from the aqueous solution by pressurizing the aqueous solution and introducing compressed air into the aqueous solution, wherein the amount of chlorine dioxide gas entrained in the foam is substantial and constitutes the active ingredient therein, wherein the chlorine dioxide gas entrained in the foam is substantially stable for at least 72 hours for effective cleaning, disinfecting or deodorizing purposes, wherein no significant amount of chlorine gas or chlorine dioxide gas is liberated from the foam to the adjacent environment during use of the foam, and wherein the odour of chlorine dioxide gas is not detected at concentrations up to 1200 ppm of chlorine dioxide gas in the pressurized foam.

61. A process as claimed in claim 60, characterised in that, the chlorine dioxide gas is generated externally of the aqueous solution and is subsequently dissolved therein.

62. A process for the preparation of a foam having substantial amounts of chlorine dioxide gas entrained therein, wherein upon use of the foam, the chlorine dioxide gas entrained therein is intended for cleaning, disinfecting or deodorizing purposes, characterised in that the process comprises the steps of providing an aqueous solution including an acid foam concentrate, a foam stabilizing agent, a surfactant and an acid, wherein a stable mixture is formed having a pH of 3.7 or lower, combining the stable mixture with an alkaline chlorite in a reaction chamber, thereby internally generating chlorine dioxide gas within the stable mixture at a relatively high conversion rate, pressurizing the stable mixture, and injecting air into the pressurized stable mixture to form a foam, thereby substantially maximising the production of chlorine dioxide gas entrained within the foam, wherein the foam is substantially stable over an appreciable time period for effective cleaning, disinfecting or deodorizing purposes, and wherein no significant amount of chlorine gas or chlorine dioxide gas is liberated from the foam to the adjacent environment during use of the foam.

63. A process as claimed in claim 62, characterised in that, the foam stabilizing agent comprises an organic polymeric foam coupler stabilizing adjuvant selected from free acid and salt forms of phosphate esters, sodium triethanolamine, alkoxylated lanolin and sodium xylene sulfonate.

64. A process as claimed in claim 62 or 63, characterised in that the surfactant is selected from anionic, nonionic, cationic and amphoteric surfactants.

65. A process as claimed in claim 62, 63 or 64, characterised in that the aqueous solution is further diluted with water.

66. A process as claimed in claim 62, 63, 64 or 65 characterised in that the stable mixture combined with the alkaline chlorite is educted into the reaction chamber.

67. A process as claimed in any one of claims 62 to 66, characterised in that, the step of pressurizing the stable mixture comprises the step of pumping the stable mixture.

68. A process as claimed in any one of claims 62 to 67 characterised in that the step of injecting air into the pressurized stable mixture comprises the step of injecting compressed air into the pressurized stable mixture.

69. A process for the preparation of a foam having substantial amounts of chlorine dioxide gas entrained therein, wherein upon use of the foam, the chlorine dioxide gas entrained therein is intended for cleaning, disinfecting or deodorizing purposes, characterised in that the process comprises the steps of providing an aqueous solution including an acid foam concentrate, a foam stabilizing agent, a surfactant and an acid, wherein a stable mixture is formed having a pH of 3.7 or lower; wherein the foam stabilizing agent comprises an organic polymeric foam coupler stabilizing adjuvant selected from free acid and salt forms of phosphate esters, sodium triethanolamine, alkoxylated lanolin and sodium xylene sulfonate; and wherein the surfactant is selected from anionic, nonionic, cationic and amphoteric surfactants, further diluting the aqueous solution with water; combining the stable mixture with an alkaline chlorite and educting the combined mixture into a reaction chamber, thereby internally generating chlorine dioxide gas within the stable mixture at a relatively high conversion rate; and thereafter forming a foam which is substantially stable over an appreciable time period for effective cleaning, disinfecting or deodorizing purposes, and wherein no significant amount of chlorine gas or chlorine dioxide gas is liberated from the foam to the adjacent environment during use of the foam.

70. A process for the preparation of a stable foam having a substantial amounts of chlorine dioxide gas entrained therein, wherein upon use of the foam, the chlorine dioxide gas entrained therein is intended for cleaning, disinfecting or deodorizing purposes, characterised in that the process comprises the steps of: first, preparing an aqueous solution having at least one surfactant therein; second, generating chlorine dioxide gas internally within the aqueous solution, such that the chlorine dioxide gas is entrained within the aqueous solution; third, pumping up the aqueous solution so as to form a pressurized solution; and fourth, injecting compressed air into pressurised solution, thereby forming a stable foam having chlorine dioxide gas entrained therein.

71. A process as claimed in claim 70, characterised in that the internally-generated chlorine dioxide gas is converted at a relatively high rate, thereby substantially maximising the production of chlorine dioxide gas entrained within the foam, wherein the foam is substantially stable over an appreciable time period for effective cleaning, disinfecting or deodorizing purposes, and wherein no significant amount of chlorine gas or chlorine dioxide gas is liberated from the foam to the adjacent environment during use of the foam.

72. A process for the preparation of a foam having substantial amounts of chlorine dioxide gas entrained therein, wherein upon use of the foam, the chlorine gas entrained therein is intended for cleaning, disinfecting or deodorizing purposes, characterised in that the process comprises the steps of providing an aqueous solution, entraining chlorine dioxide gas in the aqueous solution, including a surfactant in the aqueous solution, and forming a foam from the aqueous solution, wherein the amount of chlorine dioxide gas entrained in the foam is substantial and constitutes the active ingredient therein, wherein the foam is substantially stable over an appreciable time period for effective cleaning, disinfecting or deodorizing purposes, and wherein no significant amount of chlorine gas or chlorine dioxide gas is liberated from the foam to the adjacent environment during use of the foam.

73. A process for the preparation of a foam having substantial amounts of chlorine dioxide gas entrained therein, wherein upon use of the foam, the chlorine gas entrained therein is intended for cleaning, disinfecting or deodorizing purposes, characterised in that the process comprises the steps of providing an aqueous solution, entraining chlorine dioxide gas in the aqueous solution, including a foaming agent and a foam stabilizing agent in the aqueous solution, and forming a foam from the aqueous solution, wherein the amount of chlorine dioxide gas entrained in the foam is substantial and constitutes the active ingredient therein, wherein the foam is substantially stable over an appreciable time period for effective cleaning, disinfecting or deodorizing purposes, and wherein no significant amount of chlorine gas or chlorine dioxide gas is liberated from the foam to the adjacent environment during use of the foam.

**Revendications**

1. Solution aqueuse capable de former une mousse comprenant une proportion majeure d'eau contenant en dissolution 1 % à 20 % en poids d'un agent formateur de mousse et 10 à 1 500 mg/l de bioxyde de chlore, ledit bioxyde de chlore étant engendré à l'extérieur de la solution et y étant dissous ensuite.

2. Solution aqueuse capable de former une mousse, cette solution comprenant une proportion majeure d'eau contenant en dissolution 1 % à 20 % en poids d'un agent formateur de mousse et 10 à 1 500 mg/l de bioxyde de chlore, ledit bioxyde de chlore étant engendré dans ladite solution par la réaction d'un chlorite de métal hydrosoluble et d'un agent oxydant dissous dans la solution.

3. Solution aqueuse capable de former une mousse, cette solution comprenant une proportion majeure d'eau contenant en dissolution 1 % à 20 % en poids d'un agent formateur de mousse et 10 à 1 500 mg/l de bioxyde de chlore, ledit bioxyde de chlore étant engendré dans ladite solution par la réaction d'un chlorite de métal hydrosoluble dissous dans la solution et d'une résine cationique d'échange, sous forme acide, qui est mise en contact avec ladite solution aqueuse.

4. Solution aqueuse telle que revendiquée à la revendication 1, dans laquelle ladite solution est une solution de désinfectant.

5. Solution aqueuse telle que revendiquée à la revendication 2, dans laquelle ladite solution est une solution de désinfectant.

6. Solution aqueuse telle que revendiquée à la revendication 3, dans laquelle ladite solution est une solution de désinfectant.

7. Solution aqueuse telle que revendiquée à la revendication 1 ou 4, dans laquelle ladite solution comprend une proportion majeure d'eau, 5 % à 15 % en poids d'un agent formateur de mousse et 15 à 500 mg/l de bioxyde de chlore, la solution contenant en outre 4 % à 15 % en poids de composés amplifiant le rôle de nettoyage et de désinfection exercé par la solution.

8. Solution aqueuse telle que revendiquée à la revendication 2 ou 5, dans laquelle ladite solution comprend une proportion majeure d'eau, 5 % à 15 % en poids d'un agent formateur de mousse et 15 à 500 mg/l de bioxyde de chlore, la solution contenant en outre 4 % à 15 % en poids de composés amplifiant le rôle de nettoyage et de désinfection exercé par la solution.

9. Solution aqueuse telle que revendiquée à la revendication 3 ou 6, dans laquelle ladite solution comprend une proportion majeure d'eau, 5 % à 15 % en poids d'un agent formateur de mousse et 15 à 500 mg/l de bioxyde de chlore, la solution contenant en outre 4 % à 15 % en poids de composés amplifiant le rôle de nettoyage et de désinfection exercé par la solution.

10. Solution aqueuse telle que revendiquée à la revendication 9, qui contient en outre de l'acide chloreux et de l'ion chlorite.

11. Solution aqueuse telle que revendiquée à la revendication 8, dans laquelle ledit chlorite de métal hydrosoluble est choisi parmi des chlorites de métaux alcalins et des chlorites de métaux alcalino-terreux, et ledit agent oxydant est du chlore.

12. Solution aqueuse telle que revendiquée à la revendication 8, dans laquelle l'agent oxydant est l'acide hypochloreux.

13. Solution aqueuse telle que revendiquée à la revendication 11, dans laquelle un excès de chlore est présent dans ladite solution.

14. Solution aqueuse telle que revendiquée à la revendication 7, dans laquelle ledit chlorite de métal hydrosoluble est choisi parmi les chlorites de métaux alcalins et les chlorites de métaux alcalino-terreux.

15. Solution aqueuse telle que revendiquée à la revendication 9, dans laquelle ledit chlorite de métal hydrosoluble est choisi parmi les chlorites de métaux alcalins et les chlorites de métaux alcalino-terreux.

16. Solution aqueuse telle que revendiquée à la revendication 7, dans laquelle ladite solution a un pH alcalin.

17. Solution aqueuse telle que revendiquée à la revendication 7, dans laquelle ladite solution a un pH acide.

18. Procédé pour nettoyer et désinfecter une surface qui en a besoin, le procédé comprenant les étapes consistant à :
    (a) mélanger une solution désinfectante aqueuse, comprenant une proportion majeure d'eau, 1 % à 20 % en poids d'un agent formateur de mousse et 10 à 1 500 mg/l de bioxyde de chlore avec un gaz dans un générateur de mousse pour former ainsi une mousse désinfectante ;
    (b) projeter par pulvérisation ladite mousse sur la surface à traiter ;
    (c) laisser la mousse désinfectante demeurer au contact de ladite surface pendant une période de temps suffisante pour permettre le nettoyage et la désinfection de cette surface, et
    (d) enlever ladite mousse désinfectante de ladite surface.

19. Procédé tel que revendiqué à la revendication 18, dans lequel ladite surface est contaminée par un micro-organisme.

20. Procédé tel que revendiqué à la revendication 19, dans lequel ledit micro-organisme est choisi parmi les champignons, les bactéries, les moisissures, les spores et les virus.

21. Procédé tel que revendiqué à la revendication 19, dans lequel le gaz qui est mélangé à la solution désinfectante aqueuse dans le générateur de mousse est de l'air comprimé, et dans lequel on laisse la mousse désinfectante demeurer durant environ cinq à environ quinze minutes au contact de la surface à traiter.

22. Procédé tel que revendiqué dans l'une quelconque des revendications 18 à 21, dans lequel la solution désinfectante aqueuse est la solution de désinfectant de la revendication 4.

23. Procédé tel que revendiqué dans l'une quelconque des revendications 18 à 21, dans lequel la solution désinfectante aqueuse est la solution de désinfectant de la revendication 5.

24. Procédé tel que revendiqué dans l'une quelconque des revendications 18 à 21, dans lequel la solution désinfectante aqueuse est la solution de désinfectant de la revendication 6.

25. Procédé tel que revendiqué dans l'une quelconque des revendications 18 à 21, sans lequel la solution désinfectante aqueuse est la solution de désinfectant de la revendication 11.

26. Procédé tel que revendiqué dans l'une quelconque des revendications 18 à 21, dans lequel la solution désinfectante aqueuse est la solution de désinfectant de la revendication 14.

27. Procédé tel que revendiqué dans l'une quelconque des revendications 18 à 21, dans lequel la solution désinfectante aqueuse est la solution de désinfectant de la revendication 15.

28. Procédé pour préparer la solution désinfectante aqueuse de la revendication 11, comprenant les étapes consistant à :
    (a) dissoudre l'agent formateur de mousse, les composés amplifiant le nettoyage et la désinfection, et le chlorite de métal dans suffisamment d'eau pour former une solution concentrée de ces produits ;
    (b) mettre ladite solution concentrée en contact avec du chlore gazeux dans une colonne de pré-réaction, et
    (c) diluer le mélange réactionnel avec de l'eau, jusqu'à la concentration voulue.

29. Procédé pour préparer la solution désinfectante aqueuse de la revendication 15, comprenant les étapes consistant à :
    (a) dissoudre l'agent formateur de mousse, les composés amplifiant le nettoyage et la désinfection, et le chlorite de métal dans suffisamment d'eau pour en former une solution concentrée ;
    (b) faire passer ladite solution concentrée dans une colonne de réaction garnie de la résine cationique d'échange, sous forme acide, et

14

(c) diluer le mélange réactionnel avec de l'eau jusqu'à la concentration voulue.

30. Solution aqueuse capable de former une mousse, cette solution comprenant une proportion majeure d'eau contenant en dissolution 1 % à 20 % en poids d'un agent formateur de mousse et 10 à 1 500 mg/l de bioxyde de chlore, ledit bioxyde de chlore étant engendré dans ladite solution par la réaction d'un chlorite de métal hydrosoluble dissous dans cette solution et d'un acide (présent) en une quantité suffisante pour abaisser au-dessous de 3,7 le pH de ladite solution.

31. Solution aqueuse telle que revendiquée à la revendication 30, dans laquelle ladite solution est une solution de désinfectant.

32. Solution aqueuse telle que revendiquée à la revendication 30 ou 31, dans laquelle ladite solution a un pH compris entre 1 et 3,5.

33. Solution aqueuse telle que revendiquée à la revendication 30, 31 ou 32, dans laquelle ladite solution comprend une proportion majeure d'eau, 5 % à 15 % en poids de l'agent formateur de mousse et 15 à 500 mg/l de bioxyde de chlore,et la solution contient en outre 4 % à 15 % en poids de composés amplifiant le pouvoir de nettoyage et de désinfection (de la solution).

34. Solution aqueuse telle que revendiquée dans l'une quelconque des revendications 30 à 33, dans laquelle ledit chlorite de métal hydrosoluble est choisi parmi les chlorites de métaux alcalins et des chlorites de métaux alcalino-terreux, et ledit acide est un acide minéral.

35. Procédé tel que revendiqué à la revendication 18, dans lequel la solution désinfectante aqueuse est la solution de désinfectant de la revendication 31.

36. Procédé tel que revendiqué à la revendication 18, dans lequel la solution désinfectante aqueuse est la solution de désinfectant de la revendication 34.

37. Procédé pour préparer la solution désinfectante aqueuse de la revendication 34, ce procédé comprenant les étapes consistant à :
    (a) dissoudre l'agent formateur de mousse, les composés amplifiant le pouvoir de nettoyage et de désinfection, et le chlorite de métal dans suffisamment d'eau pour en former une solution concentrée ;

(b) ajouter à ladite solution concentrée suffisamment d'acide minéral pour obtenir un pH compris entre 1 et 3,5, et
    (c) diluer le mélange réactionnel avec de l'eau jusqu'à la concentration voulue.

38. Procédé pour la préparation d'une mousse dans laquelle sont entraînées de fortes quantités de bioxyde de chlore gazeux, la mousse étant destinée à des fins de nettoyage, de désinfection ou de désodorisation, procédé caractérisé en ce qu'il comprend les étapes consistant à fournir une solution aqueuse contenant au moins un agent tensioactif, à entraîner du bioxyde de chlore gazeux dans la solution aqueuse, la quantité de bioxyde de chlore gazeux entraînée dans la solution aqueuse étant grande et constituant l'ingrédient actif contenu dans cette solution, à mettre sous pression la solution de mousse aqueuse contenant le bioxyde de chlore, et à ajouter un gaz comprimé à la solution de mousse sous pression, de manière à former la mousse, procédé dans lequel, lors de l'utilisation de la mousse, cette mousse ne libère pas, vers l'environnement adjacent, de quantité significative de chlore gazeux ou de bioxyde de chlore gazeux.

39. Procédé tel que revendiqué à la revendication 38, caractérisé en ce que le bioxyde de chlore est engendré à l'extérieur de la solution aqueuse et il y est ensuite dissous.

40. Procédé tel que revendiqué à la revendication 38, caractérisé en ce que le bioxyde de chlore est engendré au sein de la solution aqueuse.

41. Procédé tel que revendiqué à la revendication 40, caractérisé en ce que la formation de bioxyde de chlore au sein de la solution aqueuse comprend les étapes consistant à dissoudre un chlorite de métal soluble dans la solution aqueuse, à dissoudre un hypochlorite de métal soluble dans la solution aqueuse, à fournir une chambre de réaction contenant une résine d'échange de cations et à faire simultanément passer la solution aqueuse dans la chambre de réaction, en formant ainsi du bioxyde de chlore au sein de la solution aqueuse sortant de la chambre.

42. Procédé tel que revendiqué à la revendication 41, caractérisé en ce que le chlorite de métal soluble est choisi parmi les chlorites de métaux alcalins et les chlorites de métaux alcalino-terreux.

**43.** Procédé tel que revendiqué à la revendication 41 ou 42, caractérisé en ce que l'hypochlorite de métal soluble est choisi parmi les hypochlorites de métaux alcalins et les hypochlorites de métaux alcalino-terreux.

**44.** Procédé tel que revendiqué à la revendication 41, 42 ou 43, caractérisé en ce que la résine d'échange de cations comprend une résine d'échange de cations portant de l'ion hydrogène.

**45.** Procédé tel que revendiqué à la revendication 40, caractérisé en ce que le bioxyde de chlore est engendré dans une chambre de réaction par la réaction entre une solution aqueuse d'au moins un chlorite de métal soluble, choisi parmi les chlorites de métaux alcalins et les chlorites de métaux alcalino-terreux, et une solution aqueuse contenant ledit agent tensio-actif, un agent de stabilisation de la mousse et au moins un acide choisi parmi un acide organique et un acide minéral, procédé dans lequel les corps destinés à réagir sont combinés dans une chambre de réaction pendant une longueur appropriée de temps, de sorte qu'il se forme une solution concentrée contenant une quantité de bioxyde de chlore mesurable et supérieure à celle correspondant à un taux de conversion de 0,5 %.

**46.** Procédé tel que revendiqué à la revendication 40, caractérisé en ce que le bioxyde de chlore est engendré par introduction sous vide, dans une chambre de réaction, de la solution aqueuse contenant en dissolution un chlorite de métal soluble, choisi parmi au moins un chlorite de métal alcalin soluble et des chlorites de métaux alcalino-terreux, de l'eau, ledit agent tensioactif et du chlore gazeux.

**47.** Procédé tel que revendiqué à la revendication 45 ou 46, caractérisé en ce que les chlorites, l'eau et le tensioactif sont mélangés en donnant une solution aqueuse.

**48.** Procédé tel que revendiqué aux revendications 38 ou 39, caractérisé en ce qu'un agent de stabilisation de mousse est ajouté à la solution aqueuse.

**49.** Procédé tel que revendiqué à la revendication 48, caractérisé en ce que l'agent de stabilisation de la mousse comprend un adjuvant polymère organique de stabilisation de la mousse.

**50.** Procédé tel que revendiqué à la revendication 49, caractérisé en ce que l'adjuvant polymère organique de stabilisation de la mousse est choisi parmi les formes acide libre et salines d'esters phosphoriques, de la triéthanolamine sodique, de la lanoline alcoxylée et de xylène sulfonate de sodium.

**51.** Procédé tel que revendiqué dans l'une quelconque des revendications 38 à 50, caractérisé en ce que le gaz sous pression est ou comprend du gaz comprimé.

**52.** Procédé tel que revendiqué dans l'une quelconque des revendications 38 à 51, caractérisé en ce que le bioxyde de chlore gazeux est essentiellement stable et demeure actif pendant au moins 72 h.

**53.** Procédé tel que revendiqué dans l'une quelconque des revendications 38 à 52, caractérisé en ce que l'odeur du bioxyde de chlore gazeux n'est pas décelée à des concentrations allant jusqu'à 1 200 ppm (millionièmes) de bioxyde de chlore gazeux dans la mousse pressurisée.

**54.** Procédé tel que revendiqué dans l'une quelconque des revendications 38 à 53, comprenant en outre l'étape consistant à ajouter au moins un solvant organique dans la solution aqueuse.

**55.** Procédé tel que revendiqué à la revendication 54, caractérisé en ce que le solvant organique est choisi parmi l'hexylèneglycol, l'huile de ricin, des polymères de l'éthylèneglycol, et des alcools à courte et à moyenne longueur (de chaîne).

**56.** Procédé tel que revendiqué dans l'une quelconque des revendications 30 à 55, caractérisé en ce que l'agent tensioactif est choisi parmi des tensioactifs anioniques, non-ioniques, cationiques et amphotères.

**57.** Procédé tel que revendiqué dans l'une quelconque des revendications 30 à 56, caractérisé en ce que, avant la formation de la mousse, le pH de la solution aqueuse est inférieur à 3,7.

**58.** Procédé tel que revendiqué dans l'une quelconque des revendications 30 à 57, caractérisé en ce que la solution aqueuse est encore diluée davantage avec de l'eau.

**59.** Procédé pour la préparation d'une mousse dans laquelle du bioxyde de chlore gazeux est entraîné, cette mousse étant destinée à des fins de nettoyage, de désinfection ou de désodorisation, procédé caractérisé en ce qu'il comprend les étapes consistant à fournir une solution aqueuse, entraîner du bioxyde de chlore dans une solution aqueuse, ajouter à la solution aqueuse au moins un adjuvant polymère organique à rôle de stabilisation de la mousse et de couplage avec cette mousse, ajouter au moins un solvant organique à la solution aqueuse, ajouter au moins un agent tensioactif à la solution aqueuse, le pH de la solution aqueuse étant inférieur à 3,7 et l'étape de formation de la mousse comprenant la mise sous pression ("pressurisation") de la solution aqueuse et l'introduction d'air comprimé dans la solution aqueuse, de façon que la quantité de bioxyde de chlore entraînée dans la mousse soit importante et y constitue l'ingrédient actif, la mousse pressurisée étant essentiellement stable sur au moins 72 h environ pour effectuer du nettoyage, de la désinfection ou de la désodorisation, aucune quantité significative de bioxyde de chlore ou de chlore gazeux n'étant libérée de la mousse vers l'environnement adjacent, pendant l'utilisation de la mousse, et l'odeur de bioxyde de chlore gazeux n'étant pas décelée à des concentrations allant jusqu'à 1 200 ppm (millionièmes) de bioxyde de chlore dans la mousse.

60. Procédé pour la préparation d'une mousse dans laquelle du bioxyde de chlore gazeux est entraîné, procédé dans lequel la mousse est destinée à des fins de nettoyage, de désinfection ou de désodorisation, ce procédé étant caractérisé en ce qu'il comprend les étapes consistant à fournir une solution aqueuse, à dissoudre du bioxyde de chlore gazeux dans la solution aqueuse, à ajouter dans la solution aqueuse au moins un agent de stabilisation de la mousse comprenant un adjuvant polymère organique de stabilisation de la mousse, et de couplage avec la mousse, ledit adjuvant polymère organique de stabilisation de la mousse et de couplage avec cette mousse étant choisi parmi des formes acide libre et salines d'esters phosphoriques, de la triéthanolamine sodique, de la lanoline alcoxylée et du xylène sulfonate de sodium, l'addition d'au moins un solvant organique dans la solution aqueuse, le solvant organique étant choisi parmi l'hexylèneglycol, l'huile de ricin, des polymères de l'éthylèneglycol et des alcools à courte et à moyenne longueur de chaîne, l'addition d'au moins un tensioactif à la solution aqueuse, le tensioactif étant choisi parmi les tensioactifs anioniques, non-ioniques, cationiques et amphotères, et la formation d'une mousse à partir de la solution aqueuse par mise sous pression ("pressurisation") de la solution aqueuse et introduction d'air comprimé dans la solution aqueuse, la quantité de bioxyde de chlore gazeux entraînée dans la mousse étant grande et importante et y constituant l'ingrédient actif, le bioxyde de chlore gazeux entraîné dans la mousse étant essentiellement stable pendant au moins 72 h à des fins de nettoyage, de désinfection ou de désodorisation efficaces, aucune quantité significative de chlore gazeux ou de bioxyde de chlore gazeux n'étant libérée de la mousse vers l'environnement adjacent pendant l'utilisation de la mousse, et l'odeur du bioxyde de chlore gazeux n'étant pas décelée à des concentrations allant jusqu'à 1 200 ppm (millionièmes) de bioxyde de chlore gazeux dans la mousse pressurisée.

61. Procédé tel que revendiqué à la revendication 60, caractérisé en ce que le bioxyde de chlore gazeux est engendré à l'extérieur de la solution aqueuse et il y est ensuite dissous.

62. Procédé pour la préparation d'une mousse dans laquelle de fortes quantités de bioxyde de chlore gazeux sont entraînées et, lors de l'utilisation de la mousse, le bioxyde de chlore gazeux qui y est entraîné est destiné à des fins de nettoyage, de désinfection ou de désodorisation, procédé caractérisé en ce qu'il comprend les étapes consistant à fournir une solution aqueuse comprenant un concentré de mousse acide, un agent de stabilisation de la mousse, un tensioactif et un acide, avec formation d'un mélange stable ayant un pH égal ou inférieur à 3,7, à combiner le mélange stable avec un chlorite alcalin dans une chambre de réaction, en engendrant ainsi, au sein du mélange stable, du bioxyde de chlore gazeux obtenu à un taux de conversion relativement élevé, à pressuriser le mélange stable et à injecter de l'air dans le mélange stable pressurisé afin de former une mousse, en rendant ainsi essentiellement maximale la production de bioxyde de chlore gazeux entraînée dans la mousse, cette mousse étant essentiellement stable sur une période appréciable de temps à des fins de nettoyage, de désinfection ou de désodorisation efficaces et aucune quantité significative de chlore gazeux ou de bioxyde de chlore gazeux n'étant libérée de la mousse vers l'environnement adjacent pendant l'utilisation de la mousse.

63. Procédé tel que revendiqué à la revendication 62, caractérisé en ce que l'agent de stabilisation de la mousse comprend un adjuvant polymère organique de stabilisation et de couplage de la mousse, choisi parmi les formes acides libres et salines d'esters phosphoriques, de la triéthanolamine sodique, de la lanoline alcoxylée et du xylène sulfonate de sodium.

64. Procédé tel que revendiqué à la revendication 62 et 63, caractérisé en ce que le tensioactif est choisi parmi les tensioactifs anioniques, non-ioniques, cationiques et amphotères.

65. Procédé tel que revendiqué à la revendication 62, 63, 64, caractérisé en ce que la solution aqueuse est encore diluée davantage avec de l'eau.

66. Procédé tel que revendiqué à la revendication 62, 63, 64 ou 65 caractérisé en ce que le mélange stable combiné au chlorite alcalin est envoyé dans la chambre de réaction.

67. Procédé tel que revendiqué dans l'une quelconque des revendications 62 à 66, caractérisé en ce que l'étape de pressurisation du mélange stable comprend l'étape de pompage du mélange stable.

68. Procédé tel que revendiqué dans l'une quelconque des revendications 62 à 67, caractérisé en ce que l'étape d'injection d'air dans le mélange stable pressurisé comprend l'étape d'injection d'air comprimé dans le mélange stable pressurisé.

69. Procédé pour la préparation d'une mousse dans laquelle de fortes quantités de bioxyde de chlore gazeux sont entraînées, et, lors de l'utilisation de la mousse, le bioxyde de chlore gazeux entraîné dans cette mousse est destiné à des fins de nettoyage, de désinfection ou de désodorisation, procédé caractérisé en ce qu'il comprend les étapes consistant à fournir une solution aqueuse comprenant un concentré de mousse acide, un agent de stabilisation de la mousse, un tensioactif et un acide, avec formation d'un mélange stable ayant un pH égal ou inférieur à 3,7, l'agent de stabilisation de la mousse comprenant un adjuvant polymère organique de stabilisation et de couplage de mousse choisi parmi les formes acides libres et salines d'esters phosphoriques, de la triéthanolamine sodique, une lanoline alcoxylée et du xylène sulfonate de sodium ; le tensioactif étant choisi parmi les tensioactifs anioniques, non ioniques, cationiques et amphotères ; à diluer encore davantage avec de l'eau la solution aqueuse ; à combiner le mélange stable avec un chlorite alcalin et à faire parvenir le mélange combiné dans une chambre de réaction, en engendrant ainsi au sein du mélange stable du bioxyde de chlore gazeux obtenu à un taux de conversion relativement élevé et à former ensuite une mousse qui est essentiellement stable sur une période appréciable de temps à des fins de nettoyage, de désinfection ou de désodorisation efficaces, et aucune quantité significative de chlore gazeux ou de bioxyde de chlore gazeux n'étant libérée de la mousse vers l'environnement adjacent pendant l'utilisation de la mousse.

70. Procédé pour la préparation d'une mousse stable, dans laquelle de fortes quantités de bioxyde de chlore gazeux sont entraînées, le bioxyde de chlore gazeux entraîné dans la mousse étant destiné, lors de l'utilisation de cette mousse, à des fins de nettoyage, de désinfection ou de désodorisation, procédé caractérisé en ce qu'il comprend les étapes consistant tout d'abord à préparer une solution aqueuse contenant au moins un tensioactif ; en second lieu à engendrer du bioxyde de chlore gazeux au sein de la solution aqueuse, de sorte que le bioxyde de chlore gazeux est entraîné dans la solution aqueuse ; en troisième lieu, à soumettre la solution aqueuse à du pompage de façon à former une solution pressurisée ; et, en quatrième lieu, à injecter de l'air comprimé dans la solution pressurisée, en formant ainsi une mousse stable dans laquelle du bioxyde de chlore gazeux est entraîné.

71. Procédé tel que revendiqué à la revendication 70, caractérisé en ce que le bioxyde de chlore gazeux, formé par voie interne, est converti à une vitesse et/ou à un taux relativement élevé, en rendant ainsi essentiellement maximale la production de bioxyde de chlore gazeux entraîné dans la mousse, cette mousse étant essentiellement stable sur une période appréciable de temps à des fins de nettoyage, de désinfection ou de désodorisation efficaces, et aucune quantité significative de chlore gazeux ou de bioxyde de chlore gazeux n'étant libérée de la mousse, vers l'environnement adjacent, pendant l'utilisation de la mousse.

72. Procédé pour la préparation d'une mousse dans laquelle de fortes quantités de bioxyde de chlore gazeux sont entraînées, le chlore gazeux entraîné dans la mousse étant destiné, lors de l'utilisation de la mousse, à des fins de nettoyage, de désinfection ou de désodorisation, procédé caractérisé en ce qu'il comprend les étapes consistant à fournir une solution aqueuse, à entraîner du bioxyde de chlore gazeux dans la solution aqueuse, à inclure un tensioactif dans la solution aqueuse et à former une mousse à partir de la solution aqueuse, la quantité de bioxyde de chlore gazeux entraînée dans la mousse étant forte et constituant l'ingrédient actif de cette mousse, la mousse étant essentiellement stable sur une période appréciable de temps à des fins de nettoyage, de désinfection ou de désodorisation efficaces, et aucune quantité significative de chlore gazeux ou de bioxyde de chlore gazeux n'étant libérée de la mousse, vers l'environnement adjacent, pendant l'utilisation de la mousse.

73. Procédé pour la préparation d'une mousse dans laquelle de fortes quantités de bioxyde de chlore gazeux sont entraînées, le chlore gazeux entraîné dans la mousse étant destiné, lors de l'utilisation de cette mousse, à des fins de nettoyage, de désinfection ou de désodorisation, procédé caractérisé en ce qu'il comprend les étapes consistant à fournir une solution aqueuse, à entraîner du bioxyde de chlore gazeux dans la solution aqueuse, à inclure dans la solution aqueuse un agent de moussage et un agent de stabilisation de la mousse, et à former une mousse à partir de la solution aqueuse, la quantité de bioxyde de chlore gazeux entraînée dans la mousse étant grande et constituant l'ingrédient actif présent dans cette mousse, la mousse étant essentiellement stable sur une période appréciable de temps à des fins de nettoyage, de désinfection ou de désodorisation efficaces, et aucune quantité significative de chlore gazeux ou de bioxyde de chlore gazeux n'étant libérée de la mousse, vers l'environnement adjacent, pendant l'utilisation de la mousse.

## Patentansprüche

1. Wäßrige Lösung mit der Fähigkeit einen Schaum zu bilden, die einen größeren Anteil Wasser umfaßt, in dem 1 bis 20 Gew.% eines schaumerzeugenden Mittels und 10 bis 1500 mg/l Chlordioxid gelöst sind, wobei das Chlordioxid außerhalb der Lösung erzeugt und anschließend darin gelöst worden ist.

2. Wäßrige Lösung mit der Fähigkeit einen Schaum zu bilden, die einen größeren Anteil Wasser umfaßt, in dem 1 bis 20 Gew.% eines schaumerzeugenden Mittels und 10 bis 1500 mg/l Chlordioxid gelöst sind, wobei das Chlordioxid in der Lösung durch Reaktion eines darin gelösten wasserlöslichen Metallchlorits und eines darin gelösten oxidierenden Mittels erzeugt worden ist.

3. Wäßrige Lösung mit der Fähigkeit einen Schaum zu bilden, die einen größeren Anteil Wasser umfaßt, in dem 1 bis 20 Gew.% eines schaumerzeugenden Mittels und 10 bis 1500 mg/l Chlordioxid gelöst sind, wobei das Chlordioxid in der Lösung durch Reaktion eines darin gelösten wasserlöslichen Metallchlorits und eines in der Säureform vorliegenden und mit der wäßrigen Lösung in Kontakt gebrachten kationischen Austauscherharzes hergestellt worden ist.

4. Wäßrige Lösung nach Anspruch 1, bei der die Lösung eine Desinfektionslösung ist.

5. Wäßrige Lösung nach Anspruch 2, bei der die Lösung eine Desinfektionslösung ist.

6. Wäßrige Lösung nach Anspruch 3, bei der die Lösung eine Desinfektionslösung ist.

7. Wäßrige Lösung nach Anspruch 1 oder 4, bei der die Lösung einen größeren Anteil Wasser, 5 bis 15 Gew.% schaumerzeugendes Mittel und 15 bis 500 mg/l Chlordioxid umfaßt und außerdem 4 bis 15 Gew.% die Reinigung und Desinfektion steigernde Verbindungen enthält.

8. Wäßrige Lösung nach Anspruch 2 oder 5, bei der die Lösung einen größeren Anteil Wasser, 5 bis 15 Gew.% schaumerzeugendes Mittel und 15 bis 500 mg/l Chlordioxid umfaßt und außerdem 4 bis 15 Gew.% die Reinigung und Desinfektion steigernde Verbindungen enthält.

9. Wäßrige Lösung nach Anspruch 3 oder 6, bei der die Lösung einen größeren Anteil Wasser, 5 bis 15 Gew.% schaumerzeugendes Mittel und 15 bis 500 mg/l Chlordioxid umfaßt und außerdem 4 bis 15 Gew.% die Reinigung und Desinfektion steigernde Verbindungen enthält.

10. Wäßrige Lösung nach Anspruch 9, die außerdem chlorige Säure und Chloritionen enthält.

11. Wäßrige Lösung nach Anspruch 8, bei der das wasserlösliche Metallchlorit ausgewählt ist aus Alkalimetallchloriten und Erdalkalimetallchloriten und das oxidierende Mittel Chlor ist.

12. Wäßrige Lösung nach Anspruch 8, bei der das oxidierende Mittel hypochlorige Säure ist.

13. Wäßrige Lösung nach Anspruch 11, bei der in der Lösung überschüssiges Chlor vorhanden ist.

14. Wäßrige Lösung nach Anspruch 7, bei der das wasserlösliche Metallchlorit ausgewählt ist aus Alkalimetallchloriten und Erdalkalimetallchloriten.

15. Wäßrige Lösung nach Anspruch 9, bei der das wasserlösliche Metallchlorit ausgewählt ist aus Alkalimetallchloriten und Erdalkalimetallchloriten.

16. Wäßrige Lösung nach Anspruch 7, bei der die Lösung einen alkalischen pH-Wert hat.

17. Wäßrige Lösung nach Anspruch 7, bei der die Lösung einen sauren pH-Wert hat.

18. Verfahren zur Reinigung und Desinfektion einer Oberfläche bei Bedarf, bei dem:
    a. eine wäßrige Desinfektionslösung, die einen größeren Anteil Wasser, 1 bis 20 Gew.% eines schaumerzeugenden Mittels und 10 bis 1500 mg/l Chlordioxid umfaßt, in einem Schaumerzeuger mit einem Gas gemischt wird, um dadurch einen Desinfektionsschaum zu bilden,
    b. der Schaum auf die zu behandelnde Oberfläche gesprüht wird,
    c. der Desinfektionsschaum mit der Oberfläche über einen Zeitraum in Kontakt stehen kann, der ausreicht, um deren Reinigung und Desinfektion zu erlauben, und
    d. der Desinfektionsschaum von der Oberfläche entfernt wird.

19. Verfahren nach Anspruch 18, bei dem die Oberfläche mit einem Mikroorganismus kontaminiert ist.

20. Verfahren nach Anspruch 19, bei dem dieser Mikroorganismus ausgewählt ist aus Pilzen, Bakterien, Schimmel, Sporen und Viren.

21. Verfahren nach Anspruch 19, bei dem das mit der wäßrigen Desinfektionslösung in dem Schaumerzeuger gemischte Gas Preßluft ist und der Desinfektionsschaum mit der zu behandelnden Oberfläche etwa 5 bis etwa 15 Minuten lang in Kontakt gelassen wird.

22. Verfahren nach einem der Ansprüche 18 bis 21, bei dem die wäßrige Desinfektionslösung die Desinfektionslösung gemäß Anspruch 4 ist.

23. Verfahren nach einem der Ansprüche 11 bis 21, bei dem die wäßrige Desinfektionslösung die Desinfektionslösung gemäß Anspruch 5 ist.

24. Verfahren nach einem der Ansprüche 18 bis 21, bei dem die wäßrige Desinfektionslösung die Desinfektionslösung gemäß Anspruch 6 ist.

25. Verfahren nach einem der Ansprüche 18 bis 21, bei dem die wäßrige Desinfektionslösung die Desinfektionslösung gemäß Anspruch 11 ist.

26. Verfahren nach einem der Ansprüche 18 bis 21, bei dem die wäßrige Desinfektionslösung die Desinfektionslösung gemäß Anspruch 14 ist.

27. Verfahren nach einem der Ansprüche 18 bis 21, bei dem die wäßrige Desinfektionslösung die Desinfektionslösung gemäß Anspruch 15 ist.

28. Verfahren zur Herstellung der wäßrigen Desinfektionslösung gemäß Anspruch 11, bei dem:
    a. das schaumerzeugende Mittel, die Reinigung und Desinfektion steigernden Verbindungen und das Metallchlorit in ausreichend Wasser gelöst werden, um eine konzentrierte Lösung derselben zu bilden,
    b. die konzentrierte Lösung in einer Vorreaktionssäule mit gasförmigem Chlor kontaktiert wird und
    c. die Reaktionsmischung mit Wasser auf die gewünschte Konzentration verdünnt wird.

29. Verfahren zur Herstellung der wäßrigen Desinfektionslösung gemäß Anspruch 15, bei dem:
    a. das schaumerzeugende Mittel, die Reinigung und Desinfektion steigernden Verbindungen und das Metallchlorit in ausreichend Wasser gelöst werden, um eine konzentrierte Lösung derselben zu bilden,
    b. die konzentrierte Lösung durch eine mit dem in der Säureform vorliegenden kationischen Austauscherharz gepackten Reaktionssäule geführt wird und
    c. die Reaktionsmischung mit Wasser auf die gewünschte Konzentration verdünnt wird.

30. Wäßrige Lösung mit der Fähigkeit einen Schaum zu bilden, die einen größeren Anteil Wasser umfaßt, in dem 1 bis 20 Gew.% eines schaumerzeugenden Mittels und 10 bis 1500 mg/l Chlordioxid gelöst sind, wobei das Chlordioxid in der Lösung durch Reaktion eines darin gelösten wasserlöslichen Metallchlorits und einer zur Erniedrigung des pH-Werts der Lösung auf unter 3,7 ausreichenden Menge einer Säure erzeugt worden ist.

31. Wäßrige Lösung nach Anspruch 30, bei der die Lösung eine Desinfektionslösung ist.

32. Wäßrige Lösung nach Anspruch 30 oder 31, bei der die wäßrige Lösung einen pH-Wert innerhalb des Bereichs von 1 bis 3,5 hat.

33. Wäßrige Lösung nach Anspruch 30, 31 oder 32, bei der die wäßrige Lösung einen größeren Anteil Wasser, 5 bis 15 Gew.% schaumerzeugendes Mittel und 15 bis 500 mg/l Chlordioxid umfaßt und außerdem 4 bis 15 Gew.% die Reinigung und Desinfektion steigernde Verbindungen enthält.

34. Wäßrige Lösung nach einem der Ansprüche 30 bis 33, bei der das wasserlösliche Metallchlorit ausgewählt ist aus Alkalimetallchloriten und Erdalkalimetallchloriten und die Säure eine Mineralsäure ist.

35. Verfahren nach Anspruch 18, bei dem die wäßrige Desinfektionslösung die Desinfektionslösung gemäß Anspruch 31 ist.

36. Verfahren nach Anspruch 18, bei der die wäßrige Desinfektionslösung die Desinfektionslösung gemäß Anspruch 34 ist.

37. Verfahren zur Herstellung der wäßrigen Desinfektionslösung gemäß Anspruch 34, bei dem:
a. das schaumerzeugende Mittel, die Reinigung und Desinfektion steigernden Verbindungen und das Metallchlorit in ausreichend Wasser gelöst werden, um eine konzentrierte Lösung derselben zu bilden,
b. zu der konzentrierten Lösung ausreichend Mineralsäure gegeben wird, um einen pH-Wert innerhalb des Bereichs von 1 bis 3,5 zu ergeben, und
c. die Reaktionsmischung mit Wasser auf die gewünschte Konzentration verdünnt wird.

38. Verfahren zur Herstellung eines Schaums, der erhebliche Mengen Chlordioxidgas enthält und für Reinigungs-, Desinfektions- oder Desodorierungszwecke verwendet werden soll, dadurch gekennzeichnet, daß bei dem Verfahren eine mindestens ein Tensid enthaltende wäßrige Lösung vorgelegt wird, in die wäßrige Lösung Chlordioxidgas einbracht wird, wobei die in der wäßrigen Lösung eingebrachte Menge Chlordioxidgas erheblich ist und den wirksamen Bestandteil darin ausmacht, die wäßrige Chlordioxid enthaltende Schaumlösung unter Druck gesetzt wird und der unter Druck gesetzten Schaumlösung ein Druckgas zugesetzt wird, wodurch der Schaum gebildet wird, wobei bei Verwendung des Schaums keine signifikante Menge Chlorgas oder Chlordioxidgas aus dem Schaum in die benachbarte Umgebung freigesetzt wird.

39. Verfahren nach Anspruch 38, dadurch gekennzeichnet, daß Chlordioxid außerhalb der wäßrigen Lösung erzeugt und anschließend darin gelöst wird.

40. Verfahren nach Anspruch 30, dadurch gekennzeichnet, daß Chlordioxid innerhalb der wäßrigen Lösung erzeugt wird.

41. Verfahren nach Anspruch 40, dadurch gekennzeichnet, daß bei der Erzeugung von Chlordioxidgas innerhalb der wäßrigen Lösung in der wäßrigen Lösung ein lösliches Metallchlorit gelöst wird, in der wäßrigen Lösung ein lösliches Metallhypochlorit gelöst wird, eine einen Kationenaustauscherharz enthaltende Reaktionskammer vorhanden ist und die wäßrige Lösung gleichzeitig durch die Reaktionskammer geführt wird, wodurch innerhalb der die Kammer verlassenden Lösung Chlordioxid gebildet wird.

42. Verfahren nach Anspruch 41, dadurch gekennzeichnet, daß das lösliche Metallchlorit ausgewählt ist aus Alkalimetallchloriten und Erdalkalimetallchloriten.

43. Verfahren nach Anspruch 41 oder 42, dadurch gekennzeichnet, daß das lösliche Metallhypochlorit ausgewählt ist Alkalimetallhypochloriten und Erdalkalimetallhypochloriten.

44. Verfahren nach Anspruch 41, 42 oder 43, dadurch gekennzeichnet, daß der Kationenaustauscherharz ein Wasserstoffionen tragendes Kationenaustauscherharz umfaßt.

45. Verfahren nach Anspruch 40, dadurch gekennzeichnet, daß in einer Reaktionskammer Chlordioxid durch Reaktion zwischen einer wäßrigen Lösung mindestens eines löslichen Metallchlorits ausgewählt aus Alkalimetallchloriten und Erdalkalimetallchloriten und einer wäßrigen, das Tensid, ein schaumstabilisierendes Mittel und mindestens eine Säure ausgewählt aus einer organischen und einer anorganischen Säure enthaltenden Lösung erzeugt wird, wobei die Reaktanten in einer Reaktionskammer für einen geeigneten Zeitraum kombiniert werden, wodurch eine konzentrierte Lösung gebildet wird, die eine meßbare Menge Chlordioxid enthält, die größer ist als eine Ausbeute bei 0,5% Umwandlung davon.

**46.** Verfahren nach Anspruch 40, dadurch gekennzeichnet, daß Chlordioxid erzeugt wird, indem die wäßrige Lösung, in der ein lösliches Metallchlorit ausgewählt aus mindestens einem löslichen Alkalimetallchlorit und Erdalkalimetallchloriten, Wasser, das Tensid und Chlorgas gelöst sind, im Vakuum in eine Reaktionskammer eingeführt werden.

**47.** Verfahren nach Anspruch 45 oder 46, dadurch gekennzeichnet, daß die Chlorite, das Wasser und das Tensid in eine wäßrigen Lösung gemischt werden.

**48.** Verfahren nach Anspruch 38 oder 39, dadurch gekennzeichnet, daß der wäßrigen Lösung ein schaumstabilisierendes Mittel zugesetzt wird.

**49.** Verfahren nach Anspruch 48, dadurch gekennzeichnet, daß das schaumstabilisierende Mittel ein organisches, polymeres, schaumkuppelndes und -stabilisierendes Hilfsmittel umfaßt.

**50.** Verfahren nach Anspruch 49, dadurch gekennzeichnet, daß das organische, polymere, schaumkuppelnde und -stabilisierende Hilfsmittel ausgewählt ist aus den freien Säure- und Salzformen von Phosphatestern, Natriumtriethanolamin, alkoxyliertem Lanolin und Natriumxylolsulfonat.

**51.** Verfahren nach einem der Ansprüche 38 bis 50, dadurch gekennzeichnet, daß das Druckgas Druckluft umfaßt.

**52.** Verfahren nach einem der Ansprüche 38 bis 51, dadurch gekennzeichnet, daß das Chlordioxidgas im wesentlichen stabil ist und mindestens 72 Stunden lang wirksam bleibt.

**53.** Verfahren nach einem der Ansprüche 38 bis 52, dadurch gekennzeichnet, daß bei Chlordioxidgaskonzentrationen in dem Druckschaum von bis zu 1200 ppm kein Chlordioxidgasgeruch festgestellt wird.

**54.** Verfahren nach einem der Ansprüche 38 bis 53, bei dem der wäßrigen Lösung ferner mindestens ein organisches Lösungsmittel zugesetzt wird.

**55.** Verfahren nach Anspruch 54, dadurch gekennzeichnet, daß das organische Lösungsmittel ausgewählt ist aus Hexalenglykol, Castoröl, Ethylenglykolpolymeren sowie kurzen und mittellangen Alkoholen.

**56.** Verfahren nach einem der Ansprüche 30 bis 55, dadurch gekennzeichnet, daß das Tensid ausgewählt ist anionischen, nichtionischen, kationischen und amphoteren Tensiden.

**57.** Verfahren nach einem der Ansprüche 30 bis 56, dadurch gekennzeichnet, daß der pH-Wert der wäßrigen Lösung vor der Schaumbildung unterhalb von 3,7 liegt.

**58.** Verfahren nach einem der Ansprüche 30 bis 57, dadurch gekennzeichnet, daß die wäßrige Lösung weiter mit Wasser verdünnt wird.

**59.** Verfahren zur Herstellung eines Schaums, der Chlordioxidgas enthält und zu Reinigungs-, Desinfektions- oder Desodorierungszwecken verwendet werden soll, dadurch gekennzeichnet, daß bei dem Verfahren eine wäßrige Lösung vorgelegt wird, in einer wäßrigen Lösung Chlordioxid eingebracht wird, der wäßrigen Lösung mindestens ein organisches polymeres schaumkuppelndes und -stabilisierendes Hilfsmittel zugesetzt wird, der wäßrigen Lösung mindestens ein organisches Lösungsmittel zugesetzt wird, der wäßrigen Lösung mindestens ein Tensid zugesetzt wird, wobei der pH-Wert der wäßrigen Lösung unterhalb von 3,7 liegt, und die wäßrige Lösung bei der Schaumbildung so unter Druck gesetzt und in die wäßrige Lösung Preßluft eingeführt wird, daß die in dem Schaum enthaltene Chlordioxidmenge erheblich ist und den wirksamen Bestandteil darin ausmacht, wobei der Druckschaum im wesentlichen für effektive Reinigungs-, Desinfektions- oder Desodorierungszwecke mindestens nahezu 72 Stunden stabil ist, aus dem Schaum während der Verwendung keine signifikante Menge Chlordioxid- oder Chlorgas in die benachbarte Umgebung freigesetzt wird und bei Chlordioxidkonzentrationen in dem Schaum von bis zu 1200 ppm kein Chlordioxidgasgeruch festgestellt wird.

**60.** Verfahren zur Herstellung eines Schaums, der Chlordioxidgas enthält und für Reinigungs-, Desinfektions- oder Desodorierungszwecke verwendet werden soll, dadurch gekennzeichnet, daß bei dem Verfahren eine wäßrige Lösung vorgelegt wird, in der wäßrigen Lösung Chlordioxidgas gelöst wird, der wäßrigen Lösung mindestens ein schaumstabilisierendes Mittel, das ein organisches polymeres schaumkuppelndes und -stabilisierendes Hilfsmittel umfaßt, zugesetzt wird, wobei das organische polymere schaumkuppelnde und -stabilisierende Hilfsmittel ausgewählt ist aus den freien Säure- und Salzformen von Phosphatestern, Natriumtriethanolamin, alkoxyliertem Lanolin und Natriumxylolsulfonat, der wäßrigen Lösung mindestens ein organisches Lösungsmittel zugesetzt wird, wobei das organische Lösungsmittel ausgewählt ist aus Hexalenglykol, Castoröl, Ethylenglykolpolymeren sowie kurzen und mittellangen Alkoholen, der wäßrigen Lösung mindestens ein Tensid zugesetzt wird, wobei das Tensid ausgewählt ist aus anionischen, nichtionischen, kationischen und amphoteren Tensiden, und aus der wäßrigen Lösung ein Schaum gebildet wird, indem die wäßrige Lösung unter Druck gesetzt wird und in die wäßrige Lösung Preßluft eingeführt wird, wobei die in dem Schaum enthaltene Menge Chlordioxidgas erheblich ist und den wirksamen Bestandteil darin ausmacht, das in dem Schaum enthaltene Chlordioxidgas im wesentlichen für wirksame Reinigungs-, Desinfektions- oder Desodorierungszwecke mindestens 72 Stunden lang stabil ist, aus dem Schaum während seiner Verwendung keine signifikante Menge Chlorgas oder Chlordioxidgas in die benachbarte Umgebung freigesetzt wird und bei Chlordioxidgaskonzentrationen in dem Druckschaum bis zu 1200 ppm kein Chlordioxidgasgeruch festgestellt wird.

61. Verfahren nach Anspruch 60, dadurch gekennzeichnet, daß das Chlordioxidgas außerhalb der Lösung erzeugt und anschließend darin gelöst wird.

62. Verfahren zur Herstellung eines Schaums, der erhebliche Mengen Chlordioxidgas enthält, wobei bei Verwendung des Schaums das darin enthaltene Chlordioxidgas für Reinigungs-, Desinfektions- oder Desodorierungszwecke eingesetzt werden soll, dadurch gekennzeichnet, daß eine wäßrige Lösung, die ein saures Schaumkonzentrat, ein schaumstabilisierendes Mittel, ein Tensid und eine Säure enthält, geliefert wird, wobei eine stabile Mischung mit einem pH-Wert von 3,7 oder niedriger gebildet wird, die stabile Mischung in einer Reaktionskammer mit einem Alkalichlorit kombiniert wird, wodurch innerhalb der stabilen Mischung intern, mit einer relativ großen Umwandlungsgeschwindigkeit Chlordioxidgas erzeugt wird, die stabile Mischung unter Druck gesetzt wird und in die unter Druck gesetzte stabile Mischung Luft eingepreßt wird, um einen Schaum zu bilden, wodurch die Herstellung von in dem Schaum enthaltenen Chlordioxidgas im wesentlichen maximiert wird, wobei der Schaum im wesentlichen über einen für wirksame Reinigungs-, Desinfektions- oder Desodorierungszwecke ausreichenden Zeitraum stabil ist und aus dem Schaum während seiner Verwendung keine signifikante Menge Chlorgas oder Chlordioxidgas in die benachbarte Umgebung freigesetzt wird.

63. Verfahren nach Anspruch 62, dadurch gekennzeichnet, daß das schaumstabilisierende Mittel ein organisches polymeres schaumkuppelndes und -stabilisierendes Hilfsmittel ausgewählt aus den freien Säure- und Salzformen von Phosphatestern, Natriumtriethanolamin, alkoxyliertem Lanolin und Natriumxylolsulfonat umfaßt.

64. Verfahren nach Anspruch 62 oder 63, dadurch gekennzeichnet, daß das Tensid ausgewählt ist aus anionischen, nichtionischen, kationischen und amphoteren Tensiden.

65. Verfahren nach Anspruch 62, 63 oder 64, dadurch gekennzeichnet, daß die wäßrige Lösung weiter mit Wasser verdünnt wird.

66. Verfahren nach Anspruch 62, 63, 64 oder 65, dadurch gekennzeichnet, daß die mit dem Alkalichlorit kombinierte stabile Mischung in die Reaktionskammer eingeführt wird.

67. Verfahren nach einem der Ansprüche 62 bis 66, dadurch gekennzeichnet, daß beim Unterdrucksetzen der stabilen Mischung die stabile Mischung gepumpt wird.

68. Verfahren nach einem der Ansprüche 62 bis 67, dadurch gekennzeichnet, daß beim Einpressen von Luft in die unter Druck gesetzte stabile Mischung Preßluft in die unter Druck gesetzte stabile Mischung eingepreßt wird.

69. Verfahren zur Herstellung eines Schaums, der erhebliche Mengen Chlordioxidgas enthält, wobei bei Verwendung des Schaums das darin enthaltene Chlordioxidgas für Reinigungs-, Desinfektions- oder Desodorierungszwecke verwendet werden soll, dadurch gekennzeichnet, daß bei dem Verfahren eine ein saures Schaumkonzentrat, ein schaumstabilisierendes Mittel, ein Tensid und eine Säure enthaltende wäßrige Lösung geliefert wird, wobei eine stabile Mischung mit einem pH-Wert von 3,7 oder niedriger gebildet wird, das schaumstabilisierende Mittel ein organisches polymeres schaumkuppelndes und -stabilisierendes Hilfsmittel ausgewählt aus den freien Säure- und Salzformen von Phosphatestern, Natriumtriethanolamin, alkoxyliertem Lanolin und Natriumxylolsulfonat umfaßt und das Tensid ausgewählt ist aus anionischen, nichtionischen, kationischen und amphoteren Tensiden, die wäßrige Lösung weiter mit Wasser verdünnt wird, die stabile Mischung mit einem Alkalichlorid kombiniert wird und die kombinierte Mischung in eine Reaktionskammer eingeführt wird, wodurch innerhalb der stabilen Mischung mit relativ hoher Umwandlungsgeschwindigkeit intern Chlordioxidgas erzeugt wird, anschließend ein Schaum gebildet wird, der im wesentlichen über einen für Reinigungs-, Desinfektions- oder Desodorierungszwecke ausreichenden Zeitraum im wesentlichen stabil ist, wobei aus dem Schaum bei seiner Verwendung keine signifikante Menge Chlorgas oder Chlordioxidgas in die benachbarte Umgebung freigesetzt wird.

70. Verfahren zur Herstellung eines stabilen Schaums, der erhebliche Mengen Chlordioxidgas enthält, wobei bei Verwendung des Schaums das darin enthaltene Chlordioxidgas für Reinigungs-, Desinfektions- oder Desodorierungszwecke verwendet werden soll, dadurch gekennzeichnet, daß, erstens, eine wäßrige, mindestens ein Tensid enthaltende Lösung hergestellt wird, zweitens, innerhalb der Lösung intern Chlordioxidgas erzeugt wird, so daß das Chlordioxidgas in der wäßrige Lösung enthalten ist, drittens, die wäßrige Lösung aufgepumpt wird, so daß eine unter Druck gesetzte Lösung gebildet wird, und viertens, in die unter Druck gesetzte Lösung Preßluft eingepreßt wird, wodurch ein stabiler Schaum gebildet wird, der Chlordioxidgas enthält.

71. Verfahren nach Anspruch 70, dadurch gekennzeichnet, daß das intern erzeugte Chlordioxidgas mit einer relativ großen Geschwindigkeit umgewandelt wird, wodurch die Herstellung von in dem Schaum enthaltenen Chlordioxidgas im wesentlichen maximiert wird, wobei der Schaum im wesentlichen über einen für effektive Reinigungs-, Desinfektions- oder Desodorierungszwecke ausreichenden Zeitraum stabil ist und aus dem Schaum während seiner Verwendung keine signifikante Menge Chlorgas oder Chlordioxidgas in die benachbarte Umgebung freigesetzt wird.

72. Verfahren zur Herstellung eines Schaums, der erhebliche Mengen Chlordioxidgas enthält, wobei bei Verwendung des Schaums das darin enthaltene Chlorgas für Reinigungs-, Desinfektions- oder Desodorierungszwecke verwendet werden soll, dadurch gekennzeichnet, daß bei dem Verfahren eine wäßrige Lösung vorgelegt wird, in die wäßrige Lösung Chlordioxidgas eingebracht wird, in der wäßrigen Lösung ein Tensid eingebracht wird und aus der wäßrigen Lösung ein Schaum gebildet wird, wobei die in dem Schaum enthaltene Menge Chlordioxidgas erheblich ist und den wirksamen Bestandteil darin ausmacht, der Schaum im wesentlichen über einen für effektive Reinigungs-, Desinfektions- oder Desodorierungszwecke ausreichenden Zeitraum im wesentlichen stabil ist und aus dem Schaum bei seiner Verwendung keine signifikante Menge Chlorgas oder Chlordioxidgas in die benachbarte Umgebung freigesetzt wird.

73. Verfahren zur Herstellung eines Schaums, der erhebliche Mengen Chlordioxidgas enthält, wobei bei Verwendung des Schaums das darin enthaltene Chlorgas für Reinigungs-, Desinfektions- oder Desodorierungszwecke verwendet werden soll, dadurch gekennzeichnet, daß eine wäßrige Mischung vorgelegt wird, in die wäßrige Mischung Chlordioxidgas eingebracht wird, in die wäßrige Mischung ein schaumbildendes Mittel und ein schaumstabilisierendes Mittel eingebracht werden und aus der wäßrigen Lösung ein Schaum gebildet wird, wobei die Menge des in dem Schaum enthaltenen Chlordioxidgases erheblich ist und den wirksamen Bestandteil darin ausmacht, der Schaum über einen für effektive Reinigungs-, Desinfektions- oder Desodorierungszwecke ausreichenden Zeitraum im wesentlichen stabil ist und aus dem Schaum bei seiner Verwendung keine signifikante Menge Chlorgas oder Chlordioxidgas in die benachbarte Umgebung freigesetzt wird.